(19) Europäisches Patentamt
European Patent Office
Office européen des brevets

(11) **EP 3 391 122 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(51) Int Cl.:
***G02B 27/01*** *(2006.01)*    ***G02B 5/18*** *(2006.01)*

(21) Anmeldenummer: **16819486.8**

(22) Anmeldetag: **14.12.2016**

(86) Internationale Anmeldenummer:
**PCT/EP2016/080902**

(87) Internationale Veröffentlichungsnummer:
**WO 2017/102795 (22.06.2017 Gazette 2017/25)**

(54) **OPTISCHES SYSTEM SOWIE VERFAHREN ZUM ÜBERTRAGEN EINES QUELLBILDES**

OPTICAL SYSTEM AND METHOD FOR TRANSMITTING A SOURCE IMAGE

SYSTÈME OPTIQUE AINSI QUE PROCÉDÉ POUR LE TRANSFERT D'UNE IMAGE SOURCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2015 DE 102015122055**

(43) Veröffentlichungstag der Anmeldung:
**24.10.2018 Patentblatt 2018/43**

(73) Patentinhaber: **Carl Zeiss Jena GmbH**
**07745 Jena (DE)**

(72) Erfinder:
• **SINGER, Wolfgang**
**73431 Aalen (DE)**
• **KLEEMANN, Bernd**
**01259 Dresden (DE)**
• **DEGEN, Artur**
**07743 Jena (DE)**

(74) Vertreter: **Witte, Weller & Partner Patentanwälte mbB**
**Postfach 10 54 62**
**70047 Stuttgart (DE)**

(56) Entgegenhaltungen:
**US-B1- 8 903 207**

• **LEVOLA T: "Diffractive optics for virtual reality displays", JOURNAL OF THE SOCIETY FOR INFORMATION DISPLAY - SID, SOCIETY FOR INFORMATION DISPLAY, US, Bd. 14/5, 1. Januar 2006 (2006-01-01), Seiten 467-475, XP008093627, ISSN: 1071-0922 in der Anmeldung erwähnt**

**Beschreibung**

Die Erfindung betrifft ein optisches System zum Übertragen eines Quellbildes, wobei von dem Quellbild Licht mit einem Feldwinkelspektrum ausgeht, mit einer Lichtleiteranordnung, in der Licht durch Totalreflexion propagieren kann, mit einer diffraktiven optischen Einkoppelanordnung zum Einkoppeln des von dem Quellbild ausgehenden Lichts in die Lichtleiteranordnung, und mit einer diffraktiven optischen Auskoppelanordnung zum Auskoppeln des in der Lichtleiteranordnung propagierten Lichtes aus der Lichtleiteranordnung, gemäß dem Oberbegriff des Anspruchs 1.

Die Erfindung betrifft ferner ein Verfahren zum Übertragen eines Quellbildes.

Ein optisches System sowie ein Verfahren zum Übertragen eines Quellbildes ist in dem Artikel von Tapani Levola: "Diffractive optics for virtual reality displays", Journal of the SID 14/5, 2006, Seiten 467 bis 475 offenbart. Weitere optische Systeme sowie Verfahren zum Übertragen eines Quellbildes sind aus US 2014/0140653 A1, US 8,233,204 B1, US 2014/0218801 A1 bekannt, die ein optisches System gemäß dem Oberbegriff des Patentanspruchs 1 offenbaren. Weitere optische Systeme zum Übertragen eines Quellbildes sind aus US 2006/0221448 A1 und US 8 903 207 B1 bekannt.

Ein derartiges optisches System sowie ein derartiges Verfahren werden beispielsweise in einem Anzeigesystem, wie einem HUD (head-up display) oder HMD (head-mounted display) verwendet. Ein HUD und ein HMD sind Anzeigesysteme, bei denen ein Quellbild unter Vergrößerung der Austrittspupille in das Blickfeld des Nutzers projiziert wird. Das Quellbild kann dabei beispielsweise das Bild einer Anzeige eines Fahrzeuginstruments, eines Mobiltelefons, einer Spielekonsole, eines Computers und dgl. sein. HUDs werden heutzutage beispielsweise in Flugzeugen und Kraftfahrzeugen eingesetzt, um dem Piloten bzw. Fahrer Informationen, beispielsweise Navigationsinformationen und dergleichen, in sein Sichtfeld zu projizieren, ohne dass der Pilot bzw. Fahrer seine Blickrichtung von der Geradeaus-Blickrichtung abwenden muss. Ein HMD wird im Unterschied zu einem HUD am Kopf des Nutzers getragen. Ein HMD präsentiert Bilder entweder auf einem augennahen Bildschirm oder projiziert sie direkt auf die Netzhaut. Andere Bezeichnungen für ein HMD sind auch Videobrille oder Datenbrille, Helmdisplay oder *Virtual-Reality-Helm.*

Die Hauptkomponenten solcher Anzeigesysteme sind eine Displayeinheit, die das Quellbild aus einer angeschlossenen Datenquelle liefert, und ein optisches System zum Übertragen des Quellbildes in ein Zielbild.

Eine wichtige Kenngröße solcher Anzeigesysteme ist das Sichtfeld (englisch: Field of View (FOV)). Das Sichtfeld solcher Anzeigesysteme sollte so groß sein, dass das gesamte Quellbild in das Zielbild übertragen wird. Das Sichtfeld ist die Differenz zwischen dem maximalen und dem minimalen Winkel, jeweils gemessen vom Zentrum des Bildes zu den einander gegenüberliegenden Bildrändern in horizontaler Dimension (horizontales Sichtfeld) und in vertikaler Dimension (vertikales Sichtfeld). In der vorliegenden Beschreibung wird lediglich auf das Sichtfeld in einer Dimension Bezug genommen.

Das optische System solcher Anzeigesysteme kann, wie in dem oben genannten Artikel offenbart ist, als Bestandteile eine Lichtleiteranordnung, die einen oder mehrere Lichtleiter aufweist, in der Licht durch Totalreflexion an optischen Grenzflächen propagieren kann, eine diffraktive optische Einkoppelanordnung, mit der das von dem Quellbild ausgehende Licht in die Lichtleiteranordnung eingekoppelt werden kann, und eine diffraktive optische Auskoppelanordnung aufweisen, mit der das in der Lichtleiteranordnung propagierte Licht aus der Lichtleiteranordnung ausgekoppelt werden kann, so dass das Licht in ein oder beide Augen des Nutzers eintreten kann. Die Lichtleiteranordnung kann dabei ein oder mehrere Lichtleiter aufweisen, und die Einkoppelanordnung und die Auskoppelanordnung können ein oder mehrere Beugungsgitter aufweisen.

Es hat sich bei optischen Systemen mit dem zuvor beschriebenen Aufbau gezeigt, dass das Sichtfeld eines solchen optischen Systems beschränkt ist, d.h. dass nicht das gesamte Quellbild oder mit anderen Worten das gesamte Feldwinkelspektrum des Lichts, das von dem Quellbild ausgeht, von dem optischen System übertragen werden kann. Bei größeren Quellbildern, beispielsweise im heute üblichen Format 16:9, können im übertragenen Bild Randbereiche fehlen.

Generell ist bei optischen Systemen mit dem zuvor beschriebenen Aufbau das Sichtfeld gering. Insbesondere bei HMD'S besteht dagegen der Wunsch nach möglichst großem Field of View mit Bildwinkeln des Sichtfeldes von mehr als 20°, und bevorzugt mehr als 40°.

Bei der Übertragung polychromatischer Quellbilder, wie dies beispielsweise bei der Übertragung von Videobildern der Fall ist, die das gesamte sichtbare Spektrum im Wellenlängenbereich von etwa 425 nm bis etwa 675 nm umfassen, ergibt sich das weitere Problem, dass das Sichtfeld umso kleiner wird, je größer der zu übertragende Spektralbereich ist. Aber selbst bei monochromatischer Übertragung ist das Sichtfeld beschränkt.

Bei polychromatischer Übertragung kann es aufgrund der Wellenlängenabhängigkeit der Beugung außerdem zu dem Effekt führen, dass das übertragene Quellbild gegenüber dem zu übertragenden Quellbild nicht farbtreu ist, weil beispielsweise nicht das gesamte Wellenlängenspektrum des Quellbildes in das Zielbild übertragen wird oder unterschiedliche Spektralbereiche mit unterschiedlichen Intensitäten übertragen werden.

Eine weitere das Sichtfeld beschränkende Eigenschaft eines solchen optischen Systems besteht in der Propagation des Lichts in der Lichtleiteranordnung durch Totalreflexion. Diese Art der Lichtausbreitung ist jedoch erforderlich, wenn das optische System zumindest im Blickfeld des Nutzers transparent sein soll, wie dies bei einem HUD oder HMD, insbesondere einer Datenbrille, gewünscht ist, so dass der Nutzer das übertragene Quellbild in Überlagerung mit der realen Welt sehen kann. Totalreflexionen innerhalb der Lichtleiteranordnung treten jedoch nur auf, wenn das auf die optische(n) Grenzfläche(n) der Lichtleiteranordnung einfallende Licht einen Einfallswinkel aufweist, der größer ist als der Grenzwinkel der Totalreflexion.

Bislang ist kein optisches System bereitgestellt worden, mit dem es möglich ist, polychromatische Quellbilder auf der Basis von Beugung und Totalreflexion so zu übertragen, dass ein großes Sichtfeld, beispielsweise ein Sichtfeld von 40° oder mehr, in beiden Richtungen erreicht wird.

Der Erfindung liegt daher die Aufgabe zugrunde, ein optisches System und ein Verfahren der eingangs genannten Art dahingehend weiterzubilden bzw. anzugeben, mit denen Anzeigesysteme realisiert werden können, die ein größeres Sichtfeld aufweisen als die im Stand der Technik verfügbaren Anzeigesysteme.

Erfindungsgemäß wird diese Aufgabe durch ein optisches System gemäß Anspruch 1 gelöst.

Des Weiteren wird erfindungsgemäß ein optisches Verfahren zum Übertragen eines Quellbildes gemäß Anspruch 15 angegeben.

Bei dem erfindungsgemäßen optischen System und dem erfindungsgemäßen Verfahren wird nicht das ganze Feld des Quellbildes mit dem gesamten Feldwinkelspektrum über ein einzelnes Einkoppelelement in die Lichtleiteranordnung eingekoppelt, sondern das Quellbild wird in zumindest zwei Teilfelder aufgeteilt, wobei den einzelnen Teilfeldern jeweils ein eigenes Einkoppelelement zugeordnet ist, und wobei die einzelnen Teilfelder voneinander separiert in die Lichtleiteranordnung eingekoppelt werden. Über das erste Einkoppelelement wird nur das erste Teilfeld, und über das zumindest eine zweite Einkoppelelement wird nur das zumindest eine zweite Teilfeld eingekoppelt. Die Einkopplung der Teilfelder kann in einen gemeinsamen Lichtleiter erfolgen, oder jedem Teilfeld kann ein eigener Lichtleiter zugeordnet sein. Die Einkoppelelemente für die verschiedenen Teilfelder können einander überlappen oder ohne Überlapp miteinander an der Lichtleiteranordnung angeordnet sein. Nach Propagieren der einzelnen Teilfelder durch die Lichtleiteranordnung werden die Teilfelder über die Auskoppelanordnung aus der Lichtleiteranordnung ausgekoppelt und einander überlagert, so dass der Nutzer das vollständige übertragene Quellbild sieht.

Erfindungsgemäß sind das erste Teilfeld und das zumindest eine zweite Teilfeld vor der Einkopplung in die Lichtleiteranordnung zumindest teilweise bogenförmig berandet. Das Quellbild, beispielsweise ein Display, ist üblicherweise von rechteckiger Form. Aufgrund der optischen Gegebenheiten bei der Übertragung des Quellbildes mittels Totalreflexion in der Lichtleiteranordnung kann nur ein kleinerer Feldwinkelbereich übertragen werden, wenn das Quellbild in rechteckige Teilfelder aufgespalten würde. Durch die erfindungsgemäße Aufspaltung des Quellbildes in Teilfelder, die bogenförmig berandet sind, kann dagegen, wie später noch beschrieben wird, ein größerer Feldwinkelbereich übertragen und somit ein größeres Sichtfeld erreicht werden.

Mit dem erfindungsgemäßen optischen System und dem erfindungsgemäßen Verfahren können auf diese Weise deutlich größere Sichtfelder (FOVs) erreicht werden als mit den bekannten optischen Systemen. Die Erfindung ermöglicht ein größeres Sichtfeld und/oder die Übertragung eines größeren Wellenlängenbereichs in einem einzelnen Übertragungskanal. Im Stand der Technik geht dagegen die Übertragung eines größeren Wellenlängenbereichs mit der Einschränkung des Sichtfeldes auf ein kleineres Sichtfeld einher. Das erfindungsgemäße optische System und das erfindungsgemäße Verfahren hingegen ermöglichen die Übertragung großer Wellenlängenbereiche ohne einen Verlust an Sichtfeldgröße.

Das erste Teilfeld weist einen ersten Feldrand und das zumindest eine zweite Teilfeld einen zweiten Feldrand auf, wobei der erste Feldrand dem zweiten Feldrand unmittelbar benachbart ist, und wobei der erste Feldrand konkav bogenförmig und der zweite Feldrand konvex bogenförmig ist, oder wobei der erste Feldrand konvex bogenförmig und der zweite Feldrand konkav bogenförmig ist.

Dabei können das erste Teilfeld und das zweite Teilfeld im Bereich des ersten und zweiten Feldrandes einen teilweisen Überlapp aufweisen, wenn dies erforderlich ist, um nach der Auskopplung der einzelnen Teilfelder aus der Lichtleiteranordnung ein vollständiges übertragenes Quellbild durch Aneinanderreihung der Teilfelder zu erhalten. Die Radien der bogenförmigen Feldränder können von Teilfeld zu Teilfeld nämlich geringfügig unterschiedlich sein, so dass ein geringfügiger Überlapp einen Verlust von Bildinformation vermeidet.

Das optische System weist eine Vorrichtung zum Aufteilen des Quellbildfeldes in das erste und zumindest eine zweite Teilfeld auf.

Eine solche Vorrichtung kann durch strahlablenkende Elemente in Nähe des Quellbildes realisiert sein, um das von dem Quellbild ausgehende Licht in mehrere Teilfelder aufzuteilen. Der Vorteil hierbei ist, dass das Quellbild vor der Einkopplung in die Lichtleiteranordnung nicht in einer der Anzahl an Teilfeldern entsprechenden Anzahl vervielfältigt werden muss. Letzteres ist jedoch ebenso möglich.

Insbesondere ist es bevorzugt, wenn die Vorrichtung zum Aufteilen des Quellbildes eine optische Anordnung mit zumindest einer Feldblende zur Erzeugung des ersten und/oder zweiten Teilfeldes mit zumindest teilweise bogenförmigem Feldrand aufweist.

Hierzu kann das Quellbild in entsprechender Anzahl von Vervielfältigungen bereitgestellt werden, wobei zur Erzeugung jeweils eines der Teilfelder eine entsprechende Feldblende verwendet wird, die einen Teil des Quellbildes mit gebogenem Feldrand ausblendet.

Ebenso kann es jedoch vorgesehen sein, dass die Vorrichtung zum Aufteilen des Quellbildes eine elektronische Vorrichtung zur elektronischen Erzeugung des ersten und/oder zweiten Teilfeldes mit zumindest teilweise bogenförmigem Feldrand aufweist.

In diesem Fall werden die Pixel des Quellbildes (Display) so angesteuert, dass ein Teil der Pixel dunkel bleibt, wobei die Anordnung dunkler Pixel bogenförmig berandet ist.

Des Weiteren kann die Einkoppelanordnung ein drittes Einkoppelelement zum Einkoppeln eines dritten Teilfeldes des Quellbildes aufweisen, wobei das dritte Teilfeld zwischen dem ersten und dem zweiten Teilfeld angeordnet ist, und wobei das dritte Teilfeld dritte Feldränder aufweist, von denen eines dem ersten Feldrand und das andere dem zweiten Feldrand unmittelbar benachbart ist, und wobei beide dritten Feldränder bogenförmig sind.

In dieser Ausgestaltung wird das Quellbild somit in zumindest drei Teilfelder aufgespalten, von denen die äußeren Teilfelder zumindest an einer Seite und das mittlere Teilfeld beidseitig bogenförmig berandet sind. Die einzelnen bogenförmigen Feldränder sind jeweils in der Weise näherungsweise komplementär zueinander bogenförmig, dass wenn der eine Feldrand konkav bogenförmig ist, der sich daran unmittelbar anschließende Feldrand konvex bogenförmig ist, bzw. umgekehrt.

Im Rahmen der vorliegenden Erfindung ist es jedoch nicht nur möglich, das Quellbild in Teilfelder aufzuspalten, deren einander benachbarten Feldränder bogenförmig sind, sondern es ist ebenso möglich, dass das erste Teilfeld und/oder das zweite Teilfeld an einem äußeren Feldrand bogenförmig berandet ist bzw. sind. In dieser Ausgestaltung sind demnach nicht oder nicht nur einander benachbarte Feldränder der zumindest zwei Teilfelder bogenförmig, sondern zumindest ein Feldrand zumindest eines der Teilfelder, der nicht zu einem Feldrand des anderen Teilfeldes benachbart ist, ist bogenförmig.

Obwohl ein gegenüber dem Stand der Technik größeres Sichtfeld bereits dann erreicht werden kann, wenn das Quellbild insgesamt in nur zwei Teilfelder aufgeteilt wird, von denen jedes einzeln übertragen wird, ist allgemein vorgesehen, dass die Einkoppelanordnung eine Anzahl von N Einkoppelelementen aufweist, wobei N eine ganze Zahl $\geq 2$ ist, die zur Einkopplung von Licht aus N verschiedenen Teilfeldern des Quellbildes mit Feldwinkeln aus N verschiedenen Feldwinkelbereichen des Feldwinkelspektrums in die Lichtleiteranordnung angeordnet sind.

Die Aufspaltung des Quellbildes in mehr als zwei Teilfelder hat den Vorteil, dass besonders große Sichtfelder mit großer spektraler Bandbreite erreicht werden können. Allerdings werden dann auch mehr Einkoppelelemente benötigt, und gegebenenfalls weist die Lichtleiteranordnung dann eine größere Anzahl an Lichtleitern auf, was zu einer höheren Komplexität des optischen Systems führen kann.

Eine weitere Verbesserung des erfindungsgemäßen optischen Systems wird dadurch erreicht, dass die Einkoppelanordnung vorzugsweise zumindest zwei erste und zumindest zwei zweite Einkoppelelemente aufweist, wobei eines der zwei ersten und eines der zwei zweiten Einkoppelelemente zur Einkopplung von Licht aus dem ersten Teilfeld bzw. aus dem zweiten Teilfeld in einem ersten Wellenlängenbereich in die Lichtleiteranordnung angeordnet ist, und das andere der zwei ersten und das andere der zwei zweiten Einkoppelelemente zur Einkopplung von Licht aus dem ersten Teilfeld bzw. aus dem zweiten Teilfeld in einen zweiten Wellenlängenbereich, der von dem ersten Wellenlängenbereich verschieden ist, in die Lichtleiteranordnung angeordnet ist.

Bei dieser Maßnahme findet zusätzlich zu der räumlichen Aufteilung des Quellbildes in mehrere Teilfelder auch eine Aufteilung des von dem Quellbild ausgehenden Gesamtspektralbereichs in unterschiedliche Spektralunterbereiche ("unterschiedliche Farbkanäle") statt. Mit dieser Maßnahme können die eingangs beschriebenen nachteiligen Effekte der Wellenlängenabhängigkeit der Beugung bei entsprechender Auslegung der Einkoppelelemente verringert oder sogar eliminiert werden, so dass insgesamt eine polychromatische Übertragung des Quellbildes mit großem Sichtfeld erzielt werden kann.

Vorzugsweise wird das Wellenlängenspektrum bei der vorstehend genannten Maßnahme in drei Wellenlängenbereiche unterteilt, vorzugsweise in rot, grün und blau. Die Aufteilung des Gesamtspektralbereichs des vom Quellbild ausgehenden Lichtes kann beispielsweise durch Spektralfilter erreicht werden.

In bevorzugter Weiterbildung der vorstehend genannten Maßnahme weist die Lichtleiteranordnung für die Propagation von Licht im ersten Wellenlängenbereich einen ersten Lichtleiter und für die Propagation von Licht in dem zumindest einen zweiten Wellenlängenbereich zumindest einen separaten zweiten Lichtleiter auf.

Für die Übertragung der unterschiedlichen Wellenlängenbereiche werden gemäß dieser Ausgestaltung somit getrennte Übertragungskanäle verwendet. Die einzelnen Lichtleiter sind dabei vorzugsweise quer zur Lichtausbreitungsrichtung in den Lichtleitern übereinander angeordnet bzw. gestapelt.

In einer weiteren bevorzugten Ausgestaltung weist die Lichtleiteranordnung einen ersten Lichtleiter, in den das erste Einkoppelelement das Licht aus dem ersten Teilfeld einkoppelt, und zumindest einen zweiten Lichtleiter auf, in den das zumindest eine zweite Einkoppelelement das Licht aus dem zumindest einen zweiten Teilfeld einkoppelt.

In dieser Ausgestaltung wird auch für die Übertragung der einzelnen Teilfelder des Quellbildes jeweils ein eigener Übertragungskanal verwendet, die übereinander liegend angeordnet sein können.

Im Zusammenhang mit der vorstehend genannten Maßnahme der spektralen Aufteilung des Quellbildlichtes in drei Farbkanäle und im Fall, dass das Quellbild räumlich in zwei Teilfelder aufgeteilt wird, ergeben sich somit insgesamt 2 x 3, d.h. sechs Übertragungskanäle für das Quellbild, entsprechend der Aufteilung des Quellbildes in zwei Teilfelder und des Wellenlängenspektrums in drei Wellenlängenbereiche.

Alternativ zu der vorstehend genannten Ausgestaltung kann die Lichtleiteranordnung jedoch auch einen Lichtleiter aufweisen, in den das erste Einkoppelelement das Licht des ersten Teilfeldes und das zumindest eine zweite Einkoppelelement das Licht des zumindest einen zweiten Teilfeldes einkoppeln, wobei das erste Einkoppelelement und das zweite Einkoppelelement in entgegengesetzten Endbereichen des Lichtleiters angeordnet sind.

In einer hierzu ähnlichen Ausgestaltung kann die Lichtleiteranordnung einen Lichtleiter aufweisen, in den das erste Einkoppelelement das Licht aus dem ersten Teilfeld und das zumindest eine zweite Einkoppelelement das Licht aus dem zumindest einen zweiten Teilfeld einkoppelt, wobei der Lichtleiter zwei zueinander parallele erste und zweite Abschnitte und an einem ersten Ende einen zu den ersten und zweiten Abschnitten senkrechten dritten Abschnitt aufweist, wobei das erste und zweite Einkoppelelement an freien zweiten Enden des Lichtleiters angeordnet sind.

Bei diesen Ausgestaltungen ist von Vorteil, dass die Lichtleiteranordnung insgesamt weniger Lichtleiter oder Schichten aufweist, was zu einer quer zur Lichtausbreitung in der Lichtleiteranordnung dünneren Bauweise führt. Ein weiterer Vorteil dieser Ausgestaltungen besteht darin, dass Reflexionsverluste bei der Übertragung des Quellbildes verringert werden. Ein noch weiterer Vorteil besteht darin, dass die Auskoppelanordnung mit weniger Auskoppelelementen auskommen kann.

In einer weiteren bevorzugten Ausgestaltung weist die Auskoppelanordnung ein erstes Auskoppelelement, das zum Auskoppeln von Licht des ersten Teilfeldes des Quellbildes aus der Lichtleiteranordnung angeordnet ist, und zumindest ein zweites Auskoppelelement auf, das zum Auskoppeln von Licht des zumindest einen zweiten Teilfeldes des Quellbildes aus der Lichtleiteranordnung angeordnet ist.

In dieser Ausgestaltung werden die zumindest zwei Teilfelder des Quellbildes über dem jeweiligen Teilfeld eigens zugeordnete Auskoppelelemente aus der Lichtleiteranordnung ausgekoppelt. Dies hat insbesondere den Vorteil, dass das jeweilige Auskoppelelement in Bezug auf das zugehörige Einkoppelelement individuell angepasst werden kann, insbesondere symmetrisch zu diesem oder zumindest mit gleicher Gitterperiode ausgebildet sein kann.

Im Zusammenhang mit einer der vorstehend genannten Ausgestaltungen, wonach die Lichtleiteranordnung zumindest zwei Lichtleiter für die Übertragung der zumindest zwei Teilfelder aufweist, ist es weiterhin bevorzugt, wenn das erste Auskoppelelement Licht aus dem ersten Lichtleiter und das zweite Auskoppelelement Licht aus dem zweiten Lichtleiter auskoppelt.

Im Zusammenhang mit einer der vorstehend genannten Maßnahmen, wonach die zumindest zwei Teilfelder über einen gemeinsamen Lichtleiter übertragen werden, ist vorzugsweise vorgesehen, dass das erste Auskoppelelement und das zweite Auskoppelelement Licht aus dem einen Lichtleiter auskoppelt.

In diesem Zusammenhang ist es weiterhin bevorzugt, wenn die Auskoppelanordnung eine Mehrzahl an ersten Auskoppelelementen und eine Mehrzahl an zweiten Auskoppelelementen aufweist, wobei entlang des Lichtleiters die ersten und die zweiten Auskoppelelemente alternierend angeordnet sind.

Die vorstehend genannte Maßnahme hat den Vorteil einer besonders kompakten Bauweise des optischen Systems.

In einer weiter bevorzugten Ausgestaltung, die insbesondere in Kombination mit einer oder mehreren der oben genannten Ausgestaltungen von Vorteil ist, wonach die Lichtleiteranordnung einen gemeinsamen Lichtleiter aufweist, in den die zumindest zwei Teilfelder eingekoppelt werden, ist vorgesehen, dass die Auskoppelanordnung nur ein erstes Auskoppelelement aufweist.

Hierbei ist von Vorteil, dass die Zahl an Auskoppelelementen, die für das optische System benötigt werden, reduziert werden kann.

In weiteren bevorzugten Ausgestaltungen weist das erste Einkoppelelement und/oder das zumindest eine zweite Einkoppelelement eine transmissive optische Beugungsgitterstruktur oder eine reflektive optische Beugungsgitterstruktur auf.

In gleicher Weise kann das erste Auskoppelelement und/oder das zumindest eine zweite Auskoppelelement eine transmissive optische Beugungsgitterstruktur oder eine reflektive optische Beugungsgitterstruktur aufweisen.

Reflektive optische Beugungsgitterstrukturen, insbesondere in Form von metallischen Gittern haben bei der Einkopplung den Vorteil einer höheren Einkoppeleffizienz, die über dem Einfallswinkel auch homogen ist. Für die TM (transversal magnetische)-Polarisation ist die Einkoppeleffizienz nahezu konstant, so dass eine polarisierte Einkopplung bevorzugt werden könnte. Andererseits bedeutet die Verwendung polarisierten Lichts einen Verlust von 50 % der Intensität, und eine unpolarisierte Einkopplung ist wesentlich einfacher. Da die Beugungsgitterstruktur jedoch polarisiert, kann nach der Einkopplung eine Mischung der beiden Polarisationen dadurch erreicht werden, dass an oder zwischen den Lichtleitern Strahlteiler angebracht werden, so dass die Strahlpfade mehrmals durch die Strahlteiler führen, die jeweils 50 % in jede Polarisation durchlassen und damit eine Mischung beider Polarisationen bewirken.

In einer weiteren bevorzugten Ausgestaltung weist die Beugungsgitterstruktur Stege auf, die gegenüber der Gitterbasis geneigt sind, oder die Beugungsgitterstruktur ist ein Blazegitter.

Beugungsgitterstrukturen mit geneigten Stegen und Blazegitter sind für das optische System eines Anzeigesystems gegenüber binären Gittern hinsichtlich ihrer Einkoppel- bzw. Auskoppeleffizienz zu bevorzugen. Insbesondere Blazegitter haben den Vorteil, dass ihre Beugungseffizienz in einer bestimmten Beugungsordnung maximal und in den übrigen Beugungsordnungen minimal sein kann.

Im Fall, dass die Auskoppelanordnung nur ein Auskoppelelement aufweist, wie in einer oben genannten Ausgestaltung vorgesehen sein kann, kann dieses Auskoppelelement über seine Erstreckung entlang des Lichtleiters die gleiche Gitterperiode, jedoch eine veränderliche Form der Gitterstrukturen aufweisen, um so die beiden Teilfelder, die über den einen Lichtleiter übertragen werden, in geeigneter Weise auszukoppeln.

Dabei kann es vorgesehen sein, dass die Form der Gitterstrukturen in einem mittleren Bereich des Auskoppelelementes symmetrisch und in Bereichen beidseits des mittleren Bereichs zunehmend asymmetrisch ist.

Beispielsweise kann der mittlere Bereich des Auskoppelelements eine Sinusgitterstruktur aufweisen, die für beide Teilfelder die gleiche Auskoppeleffizienz besitzt, während in den Bereichen beidseits des mittleren Bereichs die Gitterstruktur zunehmend geblazet ist und die Auskoppeleffizienz für jeweils eines der Teilfelder optimiert ist, wobei die Neigung der geblazten Gitterstrukturen in den beiden Bereichen beidseits des mittleren Bereichs zueinander entgegengesetzt ist.

In einer weiteren bevorzugten Ausgestaltung weist die Beugungsgitterstruktur des ersten Einkoppelelements und die Beugungsgitterstruktur des ersten Auskoppelelements die gleiche Gitterperiode auf, und/oder die Beugungsgitterstruktur des zweiten Einkoppelelements und die Beugungsgitterstruktur des zweiten Auskoppelelements weisen die gleiche Gitterperiode auf.

Durch diese Maßnahme wird eine Symmetrie zwischen Ein- und Auskopplung erreicht, d.h. ein Lichtstrahl, der von dem Quellbild unter einem bestimmten Feldwinkel auf die Einkoppelanordnung einfällt, über die Auskoppelanordnung unter demselben Feldwinkel aus der Lichtleiteranordnung ausgekoppelt wird. Mit anderen Worten werden gleiche Einfallswinkel in gleiche Ausfallswinkel übertragen.

In einer weiteren bevorzugten Ausgestaltung ist die Lichtleiteranordnung plan.

Der Vorteil hierbei ist, dass die Lichtleiteranordnung und insbesondere die Abstimmung der Einkoppelelemente und der Auskoppelelemente einfach zu bewerkstelligen ist, weil keine durch Krümmung der Lichtleiteranordnung hervorgerufene Wellenfrontaberrationen zu berücksichtigen sind.

In einer alternativen bevorzugten Ausgestaltung ist die Lichtleiteranordnung gekrümmt.

Der Vorteil hierbei ist, dass sich das optische System mit einer gekrümmten Lichtleiteranordnung einfacher in eine vom Nutzer getragene Brille integrieren lässt, beispielsweise wenn das Anzeigesystem, in dem das optische System verwendet wird, als HDM ausgebildet ist.

Im Zusammenhang damit besteht jedoch das Problem, dass wegen der Krümmung der Lichtleiteranordnung Wellenfrontaberrationen auftreten, die ihre Ursache in den Totalreflexionen des Lichtes an den gekrümmten Grenzflächen der Lichtleiteranordnung haben.

In einer bevorzugten Weiterbildung der vorstehend genannten Maßnahme weist die Lichtleiteranordnung zwischen der Einkoppelanordnung und der Auskoppelanordnung eine diffraktive Korrekturanordnung auf, um Aberrationen der Wellenfront des übertragenen Lichts zu korrigieren.

Wellenfrontaberrationen, seien sie geometrischer und/oder chromatischer Natur, die durch die Krümmung der Lichtleiteranordnung verursacht sind, werden mittels der diffraktiven Korrekturanordnung, die beispielsweise ein Korrekturbeugungsgitter aufweist, kompensiert. Das zwischen dem Einkoppelelement und dem Auskoppelelement entlang der gekrümmten Lichtleiteranordnung propagierende Licht "sieht" aufgrund der diffraktiven Korrekturanordnung eine plane Lichtleiteranordnung. Dies wiederum hat den Vorteil, dass für die Berechnung des oder der Einkoppel- und Auskoppelelemente die Verhältnisse einer planen Lichtleiteranordnung zugrunde gelegt werden können.

In weiteren Ausgestaltungen dieses Aspektes kann die Korrekturanordnung entlang der gekrümmten Lichtleiteranordnung nur abschnittsweise oder lokal angeordnet sein. In diesem Fall kompensiert die Korrekturanordnung die kumulativen Wellenfrontaberrationen, die an den mehreren Reflektionen in der gekrümmten Lichtleiteranordnung entstehen können. Alternativ kann die Korrekturanordnung aber auch über die ganze Fläche der gekrümmten Lichtleiteranordnung ausgeführt sein. Dies ermöglicht eine stückweise Kompensation der in der gekrümmten Lichtleiteranordnung erzeugten Wellenfrontaberrationen, beispielsweise der durch die jeweils direkt vorangehende oder direkt nachfolgende Reflektion in der gekrümmten Lichtleiteranordnung erzeugten Wellenfrontaberration. Insbesondere werden somit Aberrationen durch die Korrekturanordnung korrigiert, die infolge des gekrümmten Lichtleiters von einer Auskoppelstelle zur nächsten entstehen. Damit ist innerhalb eines Bereichs, in dem Licht über mehrere Auskoppelstellen ausgekoppelt wird, eine vollständige Korrektion des Abbildungsstrahlengangs sichergestellt und dem Betrachter wird an jeder Auskoppelstelle ein korrigiertes Bild des Quellbildes dargeboten.

Die Korrekturanordnung kann sowohl für die (in Bezug auf den Krümmungsradius) innere als auch für die äußere Fläche oder für beide Flächen der gekrümmten Lichtleiteranordnung bzw. des gekrümmten Lichtleiters ausgelegt werden. Die Wirkung der gekrümmten Lichtleiteranordnung auf Wellenfrontaberrationen und eventuell induzierte Farbaberrationen können in einem selben Gitter oder in einem zweiten Gitter der Korrekturanordnung korrigiert werden.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:

Fig. 1      eine Prinzipskizze zur Erläuterung der physikalischen Zusammenhänge der diffraktiven Einkopplung zweier Lichtstrahlen in einen Lichtleiter und diffraktiven Auskopplung derselben für zwei verschiedene Wellenlängen;

Fig. 2      einen Lichtleiter mit einer Einkoppel- und zwei Auskoppelanordnungen gemäß dem Stand der Technik;

Fig. 3      ein Diagramm, das das maximale Verhältnis der Schrittlänge zwischen Totalreflexionen eines Lichtstrahles mit großer Wellenlänge zur Schrittlänge zwischen Totalreflexionen eines Lichtstrahles mit kleiner Wellenlänge innerhalb eines Lichtleiters für verschiedene Materialien von Lichtleitern in Abhängigkeit des Sichtfeldes zeigt;

Fig. 4      eine weitere Prinzipskizze zur Erläuterung physikalischer Zusammenhänge bei diffraktiver Einkopplung von Licht in einen Lichtleiter und Propagation des Lichts über Totalreflexion in dem Lichtleiter;

Fig. 5      ein Diagramm, das den maximalen übertragbaren Wellenlängenbereich in Abhängigkeit des Sichtfeldes zeigt;

Fig. 6      ein Diagramm, das den erforderlichen minimalen Brechungsindex des Materials eines Lichtleiters in Abhängigkeit des Sichtfeldes zeigt;

Fig. 7      ein Diagramm wie in Fig. 5, das den maximalen übertragbaren Wellenlängenbereich in Abhängigkeit des Sichtfeldes zeigt;

Fig. 8      eine Prinzipskizze eines optischen Systems mit Farb-Multiplexing;

Fig. 9      ein Beispiel eines optischen Systems, das nicht alle Merkmale der vorliegenden Erfindung umfasst;

Fig. 10      ein weiteres, Beispiel eines Systems;

Fig.11      ein noch weiteres Beispiel eines optischen Systems;

Fig. 12A - E      noch weitere Beispiele eines optischen Systems gemäß einem weiteren Aspekt;

Fig. 13      eine Prinzipskizze zweier Formate von übertragenen oder übertragbaren Quellbildern;

Fig. 14      eine Prinzipskizze eines optischen Systems zur Übertragung eines Quellbildes;

Fig. 15      zwei Prinzipskizzen eines Feldwinkelspektrums im k-Raum zur Veranschaulichung übertragbarer Feldwinkelbereiche eines Quellbildes;

Fig. 16      eine weitere Prinzipskizze zur Erläuterung der Zusammenhänge übertragbarer Feldwinkel im k-Raum;

Fig. 17      weitere Prinzipskizzen zur Veranschaulichung übertragbarer Feldwinkel im k-Raum;

Fig. 18      eine Prinzipskizze ähnlich zu der unteren Skizze in Fig. 17 mit einem eingezeichneten Quellbild;

Fig. 19      sechs Prinzipskizzen entsprechend den Prinzipskizzen in Fig. 17 für drei in Blickrichtung eines Betrachters hintereinander angeordnete Lichtleiter mit drei unterschiedlichen Gitterperioden eines jeweiligen Auskoppelgitters;

Fig. 20      drei Prinzipskizzen unterschiedlicher, geringfügig überlappender Teilfelder gemäß den Prinzipskizzen in Fig. 19;

Fig. 21      zwei weitere Prinzipskizzen zur Veranschaulichung bogenförmig berandeter Feldwinkelbereiche bei der Übertragung eines Quellbildes;

| | |
|---|---|
| Fig. 22 | eine Prinzipskizze eines erfindungsgemäßen optischen Systems zur Übertragung eines Quellbildes mit drei Lichtleitern, drei Einkoppelelementen und drei Auskoppelelementen; |
| Fig. 23a) und b) | Vorrichtungen zur Erzeugung eines Teilfeldes aus einem Quellbild mit bogenförmiger Berandung in zwei Ausführungsvarianten; |
| Fig. 24 | eine Prinzipskizze ähnlich zu der rechten Prinzipskizze in Fig. 20 zur Veranschaulichung des Effekts, wenn das Quellbild nicht in mehrere bogenförmig berandete Teilfelder aufgeteilt wird; |
| Fig. 25 | eine Prinzipskizze eines optischen Systems zur Übertragung eines Quellbildes gemäß eines weiteren Aspekts; |
| Fig. 26 | eine Prinzipskizze eines weiteren optischen Systems zur Übertragung eines Quellbildes mit endseitiger Einkopplung der Teilfelder des Quellbildes; |
| Fig. 27 | einen mittleren Ausschnitt des optischen Systems von Fig. 26 zur Veranschaulichung einer Ausgestaltungsmöglichkeit eines Auskoppelelements des optischen Systems in Fig. 26; |
| Fig. 28 | eine Prinzipskizze zur Veranschaulichung der übertragbaren Feldwinkelbereiche des optischen Systems in Fig. 26 in einer Darstellung im k-Raum; |
| Fig. 29 | drei Prinzipskizzen der Aneinanderreihung übertragener Teilfelder im kRaum gemäß den übertragbaren Feldwinkelbereichen in Fig. 28; und |
| Fig. 30 | eine Prinzipskizze eines weiteren optischen Systems zur Übertragung eines Quellbildes gemäß eines weiteren Aspekts. |

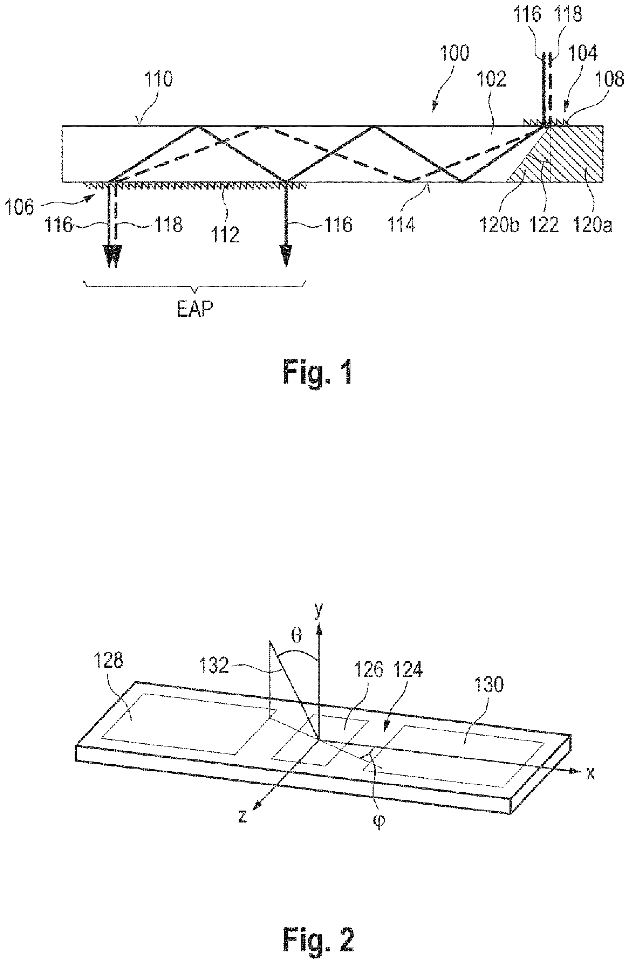

Zum besseren Verständnis der später noch zu beschreibenden erfindungsgemäßen Ausgestaltungen optischer Systeme zum Übertragen eines Quellbildes werden zunächst mit Bezug auf Figuren 1 bis 8 die physikalischen Zusammenhänge einer diffraktiven Einkopplung von Licht in einen Lichtleiter, der Propagation des Lichtes in dem Lichtleiter und der diffraktiven Auskopplung des Lichts aus dem Lichtleiter erläutert.

Fig. 1 zeigt zunächst eine Lichtleiteranordnung 100 mit einem Lichtleiter 102, der als planparallele Platte ausgebildet ist. An der Lichtleiteranordnung 100 ist eine diffraktive Einkoppelanordnung 104 und eine diffraktive Auskoppelanordnung 106 angeordnet.

Die diffraktive Einkoppelanordnung 104 weist eine transmissive Beugungsgitterstruktur 108 auf, die beispielsweise als Blazegitter ausgebildet ist, und die an einer ersten Oberfläche 110 des Lichtleiters 102 angeordnet ist.

Die Auskoppelanordnung 106 weist eine Beugungsgitterstruktur 112 auf, die an einer der Oberfläche 110 gegenüberliegenden Oberfläche 114 angeordnet ist und ebenfalls transmissiv ist.

Des Weiteren sind in Fig. 1 zwei Lichtstrahlen 116, 118 gezeigt, die auf die Einkoppelanordnung 104 senkrecht einfallen. Beide Lichtstrahlen 116 und 118 werden an der Einkoppelanordnung 104 unter Beugung in den Lichtleiter 102 eingekoppelt. Innerhalb des Lichtleiters 102 propagieren die beiden Lichtstrahlen 116, 118 durch Totalreflexion an den Oberflächen 110 und 114. Sobald die Lichtstrahlen 116, 118 die Auskoppelanordnung 112 erreichen, werden sie unter Beugung aus dem Lichtleiter 102 ausgekoppelt. Es sei hier der Fall angenommen, dass das Licht des Lichtstrahls 118 langwelliger ist als das Licht des Lichtstrahls 116. Aufgrund der Wellenlängenabhängigkeit der Beugung wird der Lichtstrahl 118 an der Einkoppelanordnung 104 in der gleichen Beugungsordnung mit einem größeren Beugungswinkel gebeugt als der Lichtstrahl 116, wie aus Fig. 1 hervorgeht.

Grundsätzlich gilt, dass mittels diffraktiver Einkopplung von Licht in die Lichtleiteranordnung 100 die Austrittspupille eines Quellbildes expandiert werden kann, wie in Fig. 1 mit dem Bereich EAP (expandierte Austrittspupille) angedeutet ist.

Wenn die Beugungsgitterstrukturen 108 und 112 symmetrisch zueinander sind, werden die Lichtstrahlen 116, 118 unter einem Ausfallswinkel aus dem Lichtleiter 102 ausgekoppelt, der mit dem Einfallswinkel der Lichtstrahlen 116 und 118 auf die Einkoppelanordnung 104 identisch ist, wie in Fig. 1 für einen senkrechten Einfall der Lichtstrahlen 116, 118 auf die Einkoppelanordnung 104 gezeigt. ist. Dies gilt aber auch für nicht senkrechten Einfall auf die Einkoppelanordnung 104.

In Fig. 1 sind zwei schraffiert dargestellte Bereiche 120a und 120b eingezeichnet, die für die Einkopplung von Licht nicht nutzbar sind. Der Bereich 120a kann nicht genutzt werden, weil in diesen Bereich gebeugtes Licht nicht in Richtung zur Auskoppelanordnung 106 hin propagieren kann. Der Bereich 120b kann nicht genutzt werden, weil in diesen Bereich gebeugtes Licht auf die Oberfläche 114 unter einem Einfallswinkel einfällt, der kleiner ist als der Grenzwinkel 122 der Totalreflexion, so dass in diesen Bereich gebeugtes Licht zumindest teilweise aus der Oberfläche 114 austritt und somit ebenfalls nicht zur Auskoppelanordnung ohne Intensitätsverlust propagieren kann.

Wie aus Fig. 1 weiter hervorgeht, wird aufgrund der mehrfachen Auskopplung weniger Licht mit der kleineren Wellenlänge (Lichtstrahl 116) ausgekoppelt als Licht mit der größeren Wellenlänge (Lichtstrahl 118). Dies führt zu einer nicht farbtreuen Übertragung von polychromatischen Quellbildern.

Fig. 2 zeigt eine Lichtleiteranordnung 124 mit einer diffraktiven Einkoppelanordnung 126 und zwei diffraktiven Auskoppelanordnungen 128 und 130. Eine solche Anordnung ist in dem eingangs genannten Artikel von Tapani Levola: "Diffractive optics for virtual reality displays" beschrieben. Diese Anordnung kann zum binokularen Übertragen eines Quellbildes in ein binokulares Zielbild verwendet werden. $\theta$ und $\varphi$ bezeichnen die Winkel eines einfallenden Lichtstrahls 132 in Bezug auf eine Achse y bzw. auf eine Achse x.

Damit über die Einkoppelanordnung 126 nur die 0-te und ± 1. Beugungsordnung eingekoppelt wird, muss die Gitterperiode d der diffraktiven Einkoppelanordnung 126 folgende Bedingung erfüllen:

$$d \leq \lambda / (1 + |\alpha_{0,max}|) \ ,$$

wobei $\alpha_0 = \sin\theta \cos\varphi$ und $\lambda$ die Wellenlänge des Lichtes ist.

Die 0-te Beugungsordnung wird den Grenzwinkel der Totalreflexion unterschreiten, so dass die 0-te Beugungsordnung nicht genutzt werden kann, während die +1. Beugungsordnung zu der Auskoppelanordnung 128 und die -1. Beugungsordnung zu der Auskoppelanordnung 130 propagieren und dort jeweils ausgekoppelt werden kann.

$\alpha_{0,max}$ ist somit ein Maß für den maximalen Einfallswinkel von Licht auf die Einkoppelanordnung 126 bei vorgegebener Gitterperiode d der Einkoppelanordnung 126, wenn nur die +1. oder-1. Beugungsordnung genutzt werden soll. Höhere Beugungsordnungen sollten vermieden werden, da diese zu Geisterbildern führen können.

Wie oben mit Bezug auf Fig. 1 erläutert wurde, sind jedoch die Beugungswinkel für unterschiedliche Wellenlängen des Lichts unterschiedlich. Dies gilt auch für die +1. Beugungsordnung sowie die -1. Beugungsordnung. Dies hat zur Folge, dass, wie in Fig. 1 dargestellt, die Schrittlänge von Lichtstrahlen unterschiedlicher Wellenlänge innerhalb des Lichtleiters 102 zwischen jeweils zwei aufeinanderfolgenden Totalreflexionen unterschiedlich ist.

Betrachtet man den Wellenlängenbereich des sichtbaren Spektrums, der von etwa 425 nm (blau) bis etwa 675 nm (rot) reicht, so ergibt sich eine nicht unerhebliche unterschiedliche Schrittweite zwischen den Totalreflexionen von Lichtstrahlen im roten Spektralbereich und Lichtstrahlen im blauen Spektralbereich.

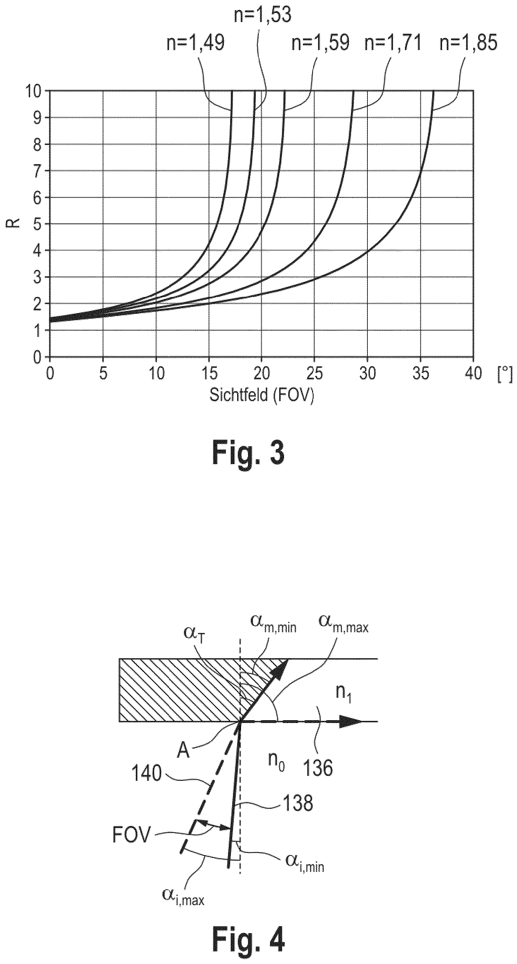

In Fig. 3 ist ein Diagramm gezeigt, in dem ein Koeffizient R, der das maximale Verhältnis der Schrittlänge zwischen Totalreflexionen eines Lichtstrahles mit maximaler Wellenlänge (im sichtbaren Bereich) zur Schrittlänge zwischen Totalreflexionen eines Lichtstrahles mit minimaler Wellenlänge (im sichtbaren Bereich) innerhalb eines Lichtleiters für verschiedene Materialien von Lichtleitern in Abhängigkeit des Sichtfeldes (FOV) für verschiedene Materialien mit unterschiedlichen Brechungsindices zeigt. Es sind die Koeffizientenkurven R für Materialien mit Brechungsindices n=1,49; n=1,53; n=1,59; n=1,71 und n=1,85 dargestellt. Aus Fig. 3 ergibt sich, dass mit zunehmendem Sichtfeld, was mit zunehmenden Einfallswinkeln auf die Einkoppelanordnung einhergeht, der Koeffizient R zunimmt, wobei die Zunahme mit zunehmendem Brechungsindex jedoch geringer ist. R sollte nicht größer als 5 sein. Für R ≤ 5 lassen sich für den in Fig. 3 betrachteten kleinsten Brechungsindex von n=1,49 lediglich Sichtfelder von etwa 15° erreichen, für den in Fig. 3 betrachteten größten Brechungsindex 1,85 Sichtfelder von etwa 32,5°.

Für den Brechungsindex n=1,71, den beispielsweise das Material MGC171 aufweist, ist es möglich, ein Sichtfeld von etwa 25° bei R=5 zu erreichen, wenn Licht im roten Spektralbereich und Licht im grünen/blauen Spektralbereich in getrennten, gestapelten Lichtleitern separat übertragen werden.

Anhand von Fig. 4 werden die Zusammenhänge einer diffraktiven Einkopplung von Licht in eine Lichtleiteranordnung 136 und Propagation des Lichtes in der Lichtleiteranordnung 136 mittels Totalreflexion allgemein erläutert. Hierzu sind in Fig. 4 zwei einfallende Lichtstrahlen 138 und 140 gezeigt, die aus einem Medium mit Brechungsindex $n_0$ unter Einfallswinkeln $\alpha_{i,max}$ und $\alpha_{i,min}$ einfallen und unter Beugung in die Lichtleiteranordnung 136, die einen Brechungsindex $n_1$ aufweist, eingekoppelt werden.

Allgemein gilt für einen unter dem Winkel $\alpha_i$ aus einem Medium mit dem Brechungsindex $n_0$ in die Lichtleiteranordnung 136 mit dem Brechungsindex $n_1$ unter diffraktiver transmissiver Einkopplung an der Einkoppelstelle A die Fresnel-Gleichung:

$$n_1 \sin\alpha_m = m\frac{\lambda}{d} + n_0 \sin\alpha_i \ ,$$

wobei m die Beugungsordnung, $\alpha_m$ der Beugungswinkel in der m-ten Beugungsordnung, d die Gitterperiode der Einkoppelanordnung und $\lambda$ die Wellenlänge des Lichtes ist.

Für die 0-te Beugungsordnung (m=0) reduziert sich die Fresnel-Gleichung zu dem Snelliusschen Brechungsgesetz. In diesem Fall ist $\alpha_{m=0}$ der Brechungswinkel. Für m = ±1, ±2, ... ergibt sich, dass der Beugungswinkel $\alpha_m$ zur Wellenlänge $\lambda$ proportional ist (die Wellenlängenabhängigkeit des Brechungsindex $n_1$ ist

demgegenüber vernachlässigbar).

Damit ein in die Lichtleiteranordnung 136 eingekoppelter Lichtstrahl in der Lichtleiteranordnung 136 durch Totalreflexion propagieren kann, ist es eine weitere Bedingung, dass der Beugungswinkel $\alpha_m$ größer ist als der Grenzwinkel der Totalreflexion $\alpha_T$.

Der Lichtstrahl 140 in Fig. 4 fällt unter dem maximalen Einfallswinkel $\alpha_{i,max}$ ein, der unter dem Beugungswinkel $\alpha_{m,max}$ gerade noch in die Lichtleiteranordnung 136 gebeugt wird. Wie aus Fig. 4 hervorgeht, breitet sich dieser Lichtstrahl jedoch entlang der Oberfläche der Lichtleiteranordnung 136 aus, und kann somit gerade nicht mehr totalreflektiert werden. Der Lichtstrahl 138 fällt unter dem Einfallswinkel $\alpha_{i,min}$ auf die Lichtleiteranordnung 136 ein, und wird unter dem Beugungswinkel $\alpha_{m,min}$ in die Lichtleiteranordnung 136 gebeugt. Der Beugungswinkel $\alpha_{m,min}$ ist jedoch bereits der Grenzwinkel der Totalreflexion $\alpha_T$. Somit stellen die Lichtstrahlen 138 und 140 die äußersten theoretischen Grenzstrahlen dar, die durch diffraktive Einkopplung in die Lichtleiteranordnung 136 durch die Lichtleiteranordnung übertragen werden können. Der Winkel zwischen diesen beiden Lichtstrahlen 140, 138 ist das Feldwinkelspektrum, bzw. das maximale Sichtfeld FOV, das demnach übertragen werden kann.

Aufgrund der Abhängigkeit der Beugungswinkel von der Wellenlänge des Lichtes und der Bedingung, dass die Einkopplung von Licht in die Lichtleiteranordnung die Bedingung der Totalreflexion genügen muss, ergibt sich, dass das das übertragbare Feldwinkelspektrum und damit das Sichtfeld sowie auch das übertragbare Wellenlängenspektrum begrenzt sind. Für ein Material der Lichtleiteranordnung, das einen vergleichsweise hohen Brechungsindex aufweist, wie dies für das Material Polycarbonat mit einem Brechungsindex von 1,588 der Fall ist, ist es sogar nicht einmal möglich, das gesamte sichtbare Wellenlängenspektrum mit einer Spektralbreite von 255 nm (425 nm bis 680 nm) bei einem Sichtfeld von 0° zu übertragen.

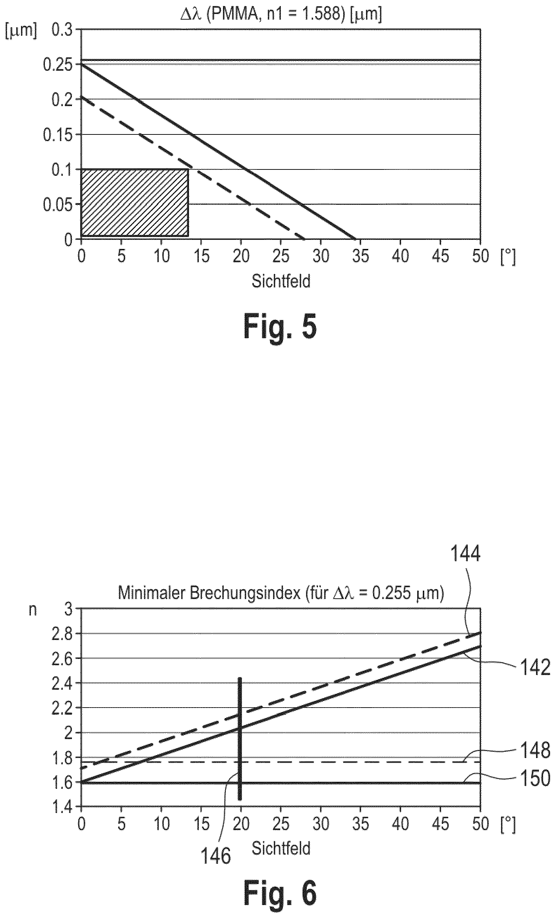

Dieser Sachverhalt ist in Fig. 5 veranschaulicht, in dem das in Abhängigkeit des Sichtfeldes (FOV) übertragbare Wellenlängenspektrum $\Delta\lambda$ für eine Lichtleiteranordnung aus Polycarbonat (n = 1,588) dargestellt ist. Die durchgezogene Linie zeigt die Kurve für das theoretisch übertragbare Wellenlängenspektrum $\Delta\lambda$, und die unterbrochene Linie die Kurve für das praktisch übertragbare Wellenlängenspektrum $\Delta\lambda$, bei der gegenüber theoretischen Kurve ein Offset von 5° zu den Einfallswinkeln der theoretisch möglichen Grenzstrahlen (138, 140, siehe Fig. 4) berücksichtigt wurde. Für das Material Polycarbonat kann ein theoretisches Sichtfeld von annähernd 30° nur bei absolut monochromatischer Übertragung erreicht werden, und ein Wellenlängenspektrum $\Delta\lambda$ mit einer Spektralbreite von 250 nm kann selbst theoretisch nur mit einem Sichtfeld von 0° übertragen werden. Die praktischen Grenzwerte liegen sogar noch unter den beiden vorstehend genannten Werten, wie aus Fig. 5 (unterbrochene Linie) hervorgeht.

Der in Fig. 5 schraffiert eingezeichnete Bereich deutet an, dass Wellenlängen in einem Spektralbereich einer Breite von 100 nm mit einem Sichtfeld von maximal 14° übertragen werden können.

Fig. 6 zeigt ein Diagramm, das den Mindestbrechungsindex n in Abhängigkeit des zu übertragenden Sichtfeldes veranschaulicht, wenn der gesamte sichtbare Spektralbereich $\Delta\lambda$ mit einer Spektralbreite von 255 nm übertragen werden soll.

Die durchgezogene Linie zeigt die theoretische Kurve des Mindestbrechungsindex n, die unterbrochene Linie 144 die praktische Kurve. Fig. 6 zeigt, dass zur Übertragung großer Sichtfelder mit dem vollen sichtbaren Wellenlängenspektrum Brechungsindices von deutlich über 2 erforderlich sind. Um ein Sichtfeld von 20° im vollen sichtbaren Wellenlängenspektralbereich zu übertragen, ist in der Praxis somit ein Brechungsindex von 2,16 (vertikale Linie 146) erforderlich. Dies ist mit gängigen Materialien für optische Zwecke jedoch nicht erreichbar. Beispielsweise zeigt eine Linie 148 in Fig. 6 den Brechungsindex von PTU, einem Episulfid, und eine Linie 150 den Brechungsindex von Polycarbonat, die sich allgemein als optische Materialien eher eignen. Darüber hinaus ist zu beachten, dass die Verwendung von Materialien mit einem Brechungsindex von deutlich größer als 2 den Nachteil hat, dass in die Lichtleiteranordnung auch Beugungsanordnungen 2. und höherer Ordnungen eingekoppelt werden, was jedoch, wie bereits oben erwähnt, vermieden werden sollte, um Geisterbilder zu vermeiden.

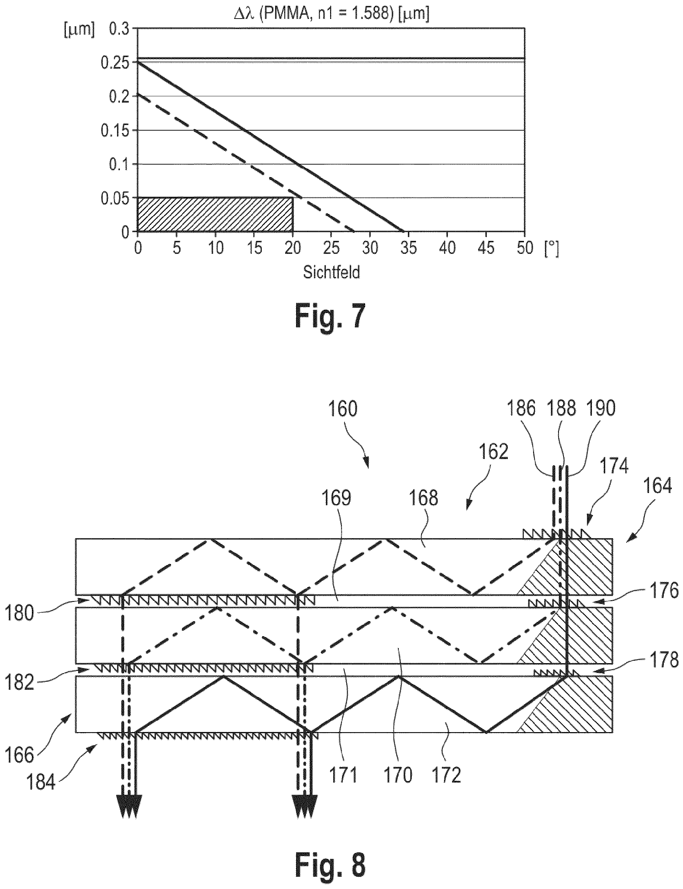

Fig. 7 zeigt nochmals das Diagramm in Fig. 5, wobei jedoch nun ein Bereich schraffiert ist, der andeutet, dass ein Wellenlängenspektrum $\Delta\lambda$ mit einer spektralen Bandbreite von weniger als 50 nm mit einem Sichtfeld von 20° übertragen werden kann.

Um ein Quellbild polychromatisch, das heißt im gesamten sichtbaren Spektralbereich übertragen zu können, wurde in Betracht gezogen, für die Übertragung einzelner Spektralbereiche jeweils einen eigenen Übertragungskanal zu verwenden, um das Problem unterschiedlicher Schrittlängen bei unterschiedlichen Wellenlängen zu lösen. Dies ist in Fig. 8 veranschaulicht.

Fig. 8 zeigt ein optisches System 160 zum Übertragen eines Quellbildes, mit einer Lichtleiteranordnung 162, einer diffraktiven Einkoppelanordnung 164 und einer diffraktiven Auskoppelanordnung 166. Die Lichtleiteranordnung 162 weist drei Lichtleiter 168, 170, 172 in Stapelanordnung auf. Zwischen den Lichtleitern 168 und 170, 172 befindet sich jeweils ein Luftraum 169, 171, wobei die Lufträume 169, 171 jedoch auch durch ein Medium gefüllt sein können, dessen Brechungsindex geringer ist als die Brechungsindices der Lichtleiter 168, 170, 172.

Die Einkoppelanordnung 164 weist drei Einkoppelelemente 174, 176, 178 auf, die jeweils Beugungsgitterstrukturen aufweisen.

Die Auskoppelanordnung 166 weist Auskoppelelemente 180, 182 und 184 auf.

Die Einkoppelelemente 174, 176, 178 sind jeweils auf einen bestimmten Wellenlängenbereich abgestimmt. Das Einkoppelelement 174 ist so abgestimmt, dass Licht (Strahl 186) im roten Spektralbereich in erster Beugungsordnung in den Lichtleiter 168 eingekoppelt wird, während Licht im grünen und blauen Spektralbereich ungebeugt durchgelassen wird. Das Einkoppelelement 176 ist darauf abgestimmt, Licht (Strahl 188) im grünen Spektralbereich zu beugen, wobei das grüne Licht entsprechend in erster Beugungsordnung in den Lichtleiter 170 eingekoppelt wird, während blaues Licht ungebeugt durchgelassen wird, und das Einkoppelelement 171 ist darauf abgestimmt, Licht (Strahl 190) im blauen Spektralbereich in den Lichtleiter 172 zu beugen.

Das Auskoppelelement 180 ist darauf abgestimmt, Licht im roten Spektralbereich aus dem Lichtleiter 168 diffraktiv auszukoppeln, während die Auskoppelelemente 182 und 184 darauf abgestimmt sind, das Licht im roten Spektralbereich ohne Beugung durchzulassen. Entsprechend ist das Auskoppelelement 182 darauf abgestimmt, Licht im grünen Spektralbereich diffraktiv aus dem Lichtleiter 170 auszukoppeln, und das Auskoppelelement 184 ist darauf abgestimmt, Licht im blauen Spektralbereich aus dem Lichtleiter 172 diffraktiv auszukoppeln.

Die Einkoppelelemente 174, 176, 178 sind des Weiteren so abgestimmt, dass das Licht aus dem jeweiligen Spektralbereich in den zugehörigen Lichtleiter 168, 170, 172 unter etwa dem gleichen Beugungswinkel eingekoppelt werden, so dass die Schrittweite zwischen einzelnen Totalreflexionen innerhalb der Lichtleiter 168, 170, 172 gleich ist.

Die Reihenfolge der Anordnung der Gitter 174, 176 und 178 für die Beugung der unterschiedlichen Spektralbereiche muss nicht der Reihenfolge in Figur 8 entsprechen und kann den Anforderungen angepasst und beispielsweise umgekehrt sein.

Durch das mit dem optischen System 160 in Fig. 8 realisierte Farb-Multiplexing kann zwar das gesamte sichtbare Wellenlängenspektrum eines Quellbildes übertragen werden, jedoch ist das Sichtfeld des optischen Systems 160 weiterhin auf einen Winkelbereich auf unter 20° beschränkt. Dies ergibt sich aus Figuren 5 und 7, aus denen hervorgeht, dass sich pro Übertragungskanal mit einem übertragenen Spektralbereich einer Spektralbreite von 50 nm nur ein Sichtfeld von 20°, und mit einem übertragenen Spektralbereich einer Spektralbreite von 100 nm pro Kanal sogar nur ein Sichtfeld von 14° erreichen lässt.

Eine weitere Einengung der einzelnen Spektralbereiche ist in Zusammenhang mit RGB-Displays als Bildgebern nicht gewünscht und führt darüber hinaus, wie in Figuren 5 und 7 gezeigt, nicht zu hinreichend großen Feldwinkeln mit FOV > 20°.

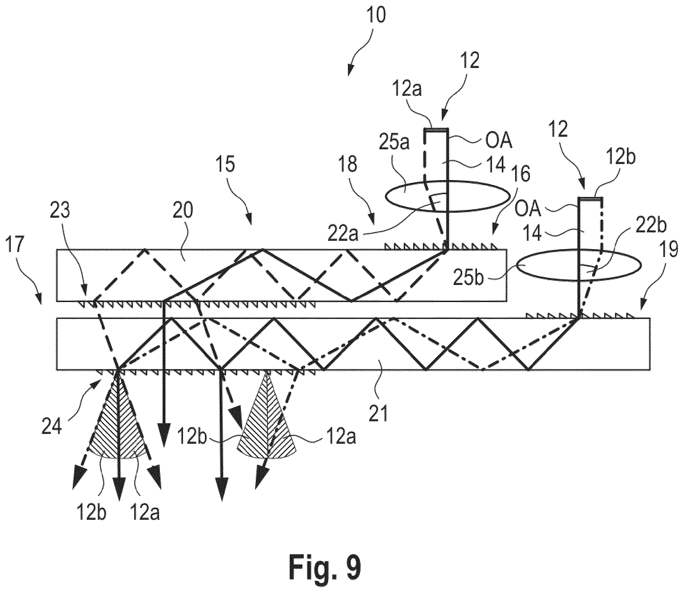

Mit Bezug auf Fig. 9 wird ein Beispiel eines optischen Systems beschrieben, mit dem Sichtfelder von über 20° erreicht werden können.

Fig. 9 zeigt ein optisches System 10 zum Übertragen eines Quellbildes 12. Das optische System 10 weist eine Lichtleiteranordnung 15 auf, in der Licht durch Totalreflexion propagieren kann. Weiterhin weist das optische System 10 eine diffraktive optische Einkoppelanordnung 16 zum Einkoppeln des von dem Quellbild 12 ausgehenden Lichts 14 in die Lichtleiteranordnung 15 auf. Das optische System 10 weist außerdem eine diffraktive optische Auskoppelanordnung 17 zum Auskoppeln des in der Lichtleiteranordnung 15 propagierten Lichtes aus der Lichtleiteranordnung 15 auf. Die Einkoppelanordnung 16 weist ein erstes diffraktives Einkoppelelement 18 und ein zweites diffraktives Einkoppelelement 19 auf. Das erste diffraktive Einkoppelelement 18 ist an einem ersten Lichtleiter 20 der Lichtleiteranordnung 15 angeordnet, und das zweite diffraktive Einkoppelelement 19 ist an einem zweiten Lichtleiter 21 der Lichtleiteranordnung 15 angeordnet. Die beiden Lichtleiter 20 und 21 sind hierbei gestapelt angeordnet.

Im Unterschied zu den bisher beschriebenen optischen Systemen wird das Quellbild 12 räumlich in zumindest zwei Teilfelder 12a und 12b aufgeteilt, wobei das erste Teilfeld 12a über das erste Einkoppelelement 18 in den Lichtleiter 20 eingekoppelt wird, während das zweite Teilfeld 12b von dem ersten Teilfeld 12a separiert über das zweite Einkoppelelement 19 in den zweiten Lichtleiter 21 eingekoppelt wird.

Entsprechend der Aufteilung des Quellbildes 12 in zumindest zwei Teilfelder 12a, 12b, ..., in dem vorliegenden Beispiel in genau zwei Teilfelder 12a und 12b, wird auch das von dem Quellbild 12 ausgehende Feldwinkelspektrum entsprechend in mehrere, hier zwei Feldwinkelbereiche 22a und 22b aufgeteilt. Von dem ersten Teilbild 12a geht somit Licht 14 mit Feldwinkeln aus einem ersten Feldwinkelbereich 22a aus, und von dem zweiten Teilfeld 12b geht Licht 14 mit Feldwinkeln aus einem zweiten Feldwinkelbereich 22b aus. Beispielsweise kann das von dem Quellbild 12 ausgehende Feldwinkelspektrum bei einer Aufteilung des Quellbildes 12 in zwei Teilfelder in einen ersten Feldwinkelbereich mit Feldwinkeln in einem Bereich von $-\alpha$ bis 0° und in einen zweiten Feldwinkelbereich mit Feldwinkeln in einem Bereich von 0° bis $+\alpha$ aufgeteilt werden, wobei ein Feldwinkel von 0° einer Einfallsrichtung eines Lichtstrahls parallel zur optischen Achse OA einer Abbildungsoptik 25a, 25b entspricht.

Beispielsweise ist die Aufteilung des Quellbildes derart getroffen, dass das erste Teilfeld 12a Feldwinkel in einem Feldwinkelbereich von 0° bis +20° enthält, während das zweite Teilfeld 12b Feldwinkel in einem Feldwinkelbereich von -20° bis 0° enthält.

Das erste Teilfeld 12a wird über die erste Einkoppelanordnung 18 in den Lichtleiter 20 eingekoppelt, in dem es per Totalreflexion zu einem ersten Auskoppelelement 23 gelangt, über das das erste Teilfeld 12a aus dem Lichtleiter 20 ausgekoppelt wird.

Das zweite Teilfeld 12b wird über das Einkoppelelement 19 in den zweiten Lichtleiter 21 eingekoppelt, in dem es per Totalreflexion zu einem zweiten Auskoppelelement 24 gelangt, über das das zweite Teilfeld 12b aus dem Lichtleiter 21 ausgekoppelt wird. Nach der Auskopplung beider Teilfelder 12a und 12b aus der Lichtleiteranordnung 15 sind die übertragenen Teilfelder 12a und 12b einander überlagert und fügen sich zu dem vollen übertragenen Quellbild zusammen, wobei das Sichtfeld die Summe der Feldwinkelbereiche der Teilbilder 12a, 12b ist.

Durch die Aufspaltung des Quellbildes 12 in mehrere Teilfelder lässt sich somit das optische System 10 mit einem größeren Sichtfeld realisieren, in dem vorliegenden Beispiel mit einem Sichtfeld von 2 x 20° = 40°. Mit anderen Worten kann durch die Aufteilung des Quellbildes 12 in mehrere Teilfelder 12a, 12b, ... das volle Feldwinkelspektrum des Quellbildes 12 übertragen werden.

Während in dem gezeigten Beispiel das Quellbild 12 in genau zwei Teilfelder aufgeteilt wird, ist es allgemein möglich, das Quellbild 12 in N Teilfelder aufzuteilen, wobei N eine ganze Zahl $\geq 2$ ist, wobei die Einkoppelanordnung 16 dann N Einkoppelelemente aufweist.

Das Konzept der Aufteilung des Quellbildes 12 in eine Mehrzahl von Teilfeldern kann nun außerdem vorteilhafterweise mit dem mit Bezug auf Fig. 8 beschriebenen Farb-Multiplexing kombiniert werden. Dies kann dadurch realisiert werden, dass das erste Teilfeld 12a gemäß Fig. 8 hinsichtlich seines Wellenlängenspektrums in zwei (rot und blau/grün) oder in drei Wellenlängenbereiche (rot, grün, blau) wie in Fig. 8 dargestellt aufgeteilt wird, wobei pro Teilbild 12a, 12b jedem Wellenlängenbereich ein eigenes Einkoppelelement wie die Einkoppelelemente 174, 176, 178 in Fig. 8 zugeordnet werden, und entsprechend drei Lichtleiter, wie die Lichtleiter 168, 170 und 172 in Fig. 8.

Insgesamt ergeben sich dann bei einer Aufteilung des Quellbildes 12 hinsichtlich des Feldwinkelspektrums in zwei Teilfelder 12a, 12b und bei einer zusätzlichen Aufteilung des von dem Quellbild 12 ausgehenden Wellenlängenspektrums in drei Wellenlängenbereiche insgesamt sechs Übertragungskanäle mit sechs Lichtleitern und sechs Einkoppelelementen. Ebenso ist dann eine entsprechende Anzahl von sechs Auskoppelelementen für die sechs Übertragungskanäle vorgesehen.

Mit Bezug wieder auf Fig. 9 sind die Einkoppelelemente 18 und 19 hinsichtlich ihrer Beugungseffizienzen in der +1. oder -1. Beugungsordnung optimiert. Das erste Einkoppelelement 18 ist zur Einkopplung des ersten Teilfeldes 12a hinsichtlich seiner Beugungseffizienz in erster Beugungsordnung auf den Feldwinkelbereich 22a optimiert. Das zweite Einkoppelelement 19 zur Einkopplung des zweiten Teilfeldes 12b ist hinsichtlich seiner Beugungseffizienz in erster Beugungsordnung auf den Feldwinkelbereich 22b optimiert, wobei hier die gegenüber den Einfallswinkeln aus dem ersten Feldwinkelbereich 22a bzgl. der optischen Achse OA gegenläufige Orientierung der Einfallswinkel aus dem Feldwinkelbereich 22b zu berücksichtigen ist. Außerdem sind die Einkoppelelemente 18 und 19 so abgestimmt, dass die Beugungswinkel von Lichtstrahlen aus den beiden Teilfeldern 12a, 12b, die bis auf das Vorzeichen den gleichen Einfallswinkel auf die Einkoppelelemente 18 und 19 aufweisen, mit dem gleichen Beugungswinkel in den Lichtleiter 20 und 21 eingekoppelt werden, so dass die Schrittlänge dieser Lichtstrahlen zwischen den Totalreflexionen gleich sind, wie in Fig. 9 gezeigt ist.

Das Auskoppelelement 23 ist symmetrisch zu dem Einkoppelelement 18, so dass von dem Teilfeld 12a auf das Einkoppelelement 18 unter einem bestimmten Feldwinkel einfallende Lichtstrahlen unter dem gleichen Feldwinkel aus dem Auskoppelelement 23 ausgekoppelt werden. Gleiches gilt für die Anpassung des Auskoppelelements 24 an das Einkoppelelement 19 für das zweite Teilfeld 12b. Die vorstehend genannte Symmetrie wird insbesondere dadurch erreicht, dass die Gitterperiode des Auskoppelelements 23 gleich der Gitterperiode des Einkoppelelements 18 ist. Ebenso weist das Auskoppelelement 24 eine Gitterperiode auf, die gleich der Gitterperiode des Einkoppelelements 19 ist.

Weiterhin ist die Beugungseffizienz des Auskoppelelements 24 hinsichtlich des von dem ersten Teilfeld 12a kommenden Lichtes minimiert, so dass das von dem Teilfeld 12a kommende Licht durch das Auskoppelelement 24 ungebeugt oder im Wesentlichen ungebeugt durchtreten kann.

Die Spektralbereiche und erforderlichen Gitterperioden hängen dabei von der Brechzahl des Lichtleiters 21 ab. Im Folgenden sind Beispiele für Polycarbonat angegeben. Wählt man für den Spektralbereich den blauen Spektralbereich mit Wellenlängen zwischen etwa 430nm und 470nm, so ergibt sich für das erste Gitter 18 eine Gitterperiode von etwa 300nm und für das zweite Gitter 19 eine Gitterperiode von etwa 390nm. Für den grünen Spektralbereich mit Wellenlängen zwischen 520nm und 570nm ergeben sich Gitterperioden von 360nm bzw. 470nm. Für den roten Spektralbereich zwischen 600nm und 660nm liegen die zu wählenden Gitterperioden dagegen im Bereich von 420nm bzw. 550nm für das jeweils erste bzw. zweite Gitter 18 bzw. 19. Die Gitterperioden der Auskoppelgitter 23, 24 sind jeweils analog zu den Einkoppelgittern 18, 19 auszulegen.

In dem in Fig. 9 gezeigten Beispiel sind die Einkoppelelemente 18, 19 und die Auskoppelelemente 23 und 24 jeweils als transmissive Einkoppel- bzw. Auskoppelelemente ausgebildet, und weisen entsprechend transmissive optische Beugungsgitterstrukturen auf.

Es ist jedoch ebenso möglich, anstelle von transmissiven Einkoppelelementen und transmissiven Auskoppelelementen reflektive Einkoppelelemente und/oder reflektive Auskoppelelemente vorzusehen, die dann entsprechend im Unterschied zu der in Fig. 9 gezeigten Anordnung an den entgegengesetzten Oberflächen der Lichtleiter 20 bzw. 21 angeordnet sind. Insbesondere reflektive Blazegitter erweisen sich als vorteilhaft, da sie eine über den Feldwinkelbereich von 0° bis 20° und von -20° bis 0° nahezu konstante Beugungseffizienz in erster Beugungsordnung aufweisen. Die beiden Feldwinkelbereiche können gleich groß sein, jedoch können sie auch unterschiedlich groß sein. Die beiden Feldbereiche können aneinander angrenzen oder partiell überlappen. Die Homogenität des überlappenden Bereichs kann über das dargestellte Signal am Display eingestellt werden.

Die vorstehend genannten Beugungsgitterstrukturen können sowohl im Falle transmissiver als auch im Falle reflektiver Beugungsgitterstrukturen als Blazegitter ausgebildet sein, oder trapezförmige oder rechteckige Stege aufweisen, die gegenüber der Gitterbasis geneigt sind.

Die Aufteilung des Quellbildes 12 in mehrere Teilfelder 12a, 12b, ... kann dadurch realisiert sein, dass eine entsprechende Anzahl von identischen Quellbildern 12 bereitgestellt wird, wobei beispielsweise mittels Blenden erreicht wird, dass von jedem dieser Quellbilder nur Licht aus einem Teilfeld ausgeht.

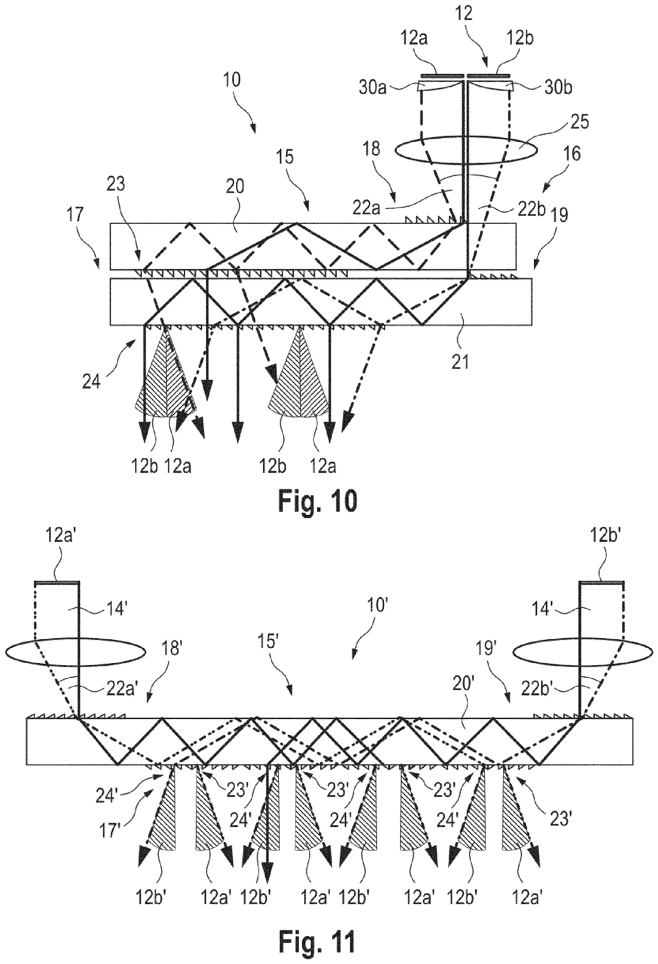

Eine andere Möglichkeit der Aufteilung des Quellbildes 12 in Teilfelder 12a, 12b, ... ist in Fig. 10 gezeigt. Gemäß Fig. 10 wird das Quellbild 12 mittels optischer ablenkender Elemente 30a, 30b, ... in die Teilfelder 12a, 12b, ... aufgeteilt. In diesem Fall muss das Quellbild nur ein-fach bereitgestellt werden.

Im Übrigen gilt die Beschreibung zu Fig. 9 auch für Fig. 10.

Fig. 11 zeigt ein weiteres Beispiel eines optischen Systems 10', bei dem Elemente, die mit Elementen der Beispiele in Figuren 9 und 10 vergleichbar oder identisch sind, mit demselben Bezugzeichen versehen sind, ergänzt um einen "'".

Das optische System 10' weist eine Lichtleiteranordnung 15' auf, die nur einen Lichtleiter 20' aufweist, der sowohl zur Übertragung des Teilfeldes 12a' und des Teilfeldes 12b' dient. Das Teilfeld 12a' wird über ein diffraktives Einkoppelelement 18' und das Teilfeld 12b' wird über ein diffraktives Einkoppelelement 19' in den gemeinsamen Lichtleiter 20' eingekoppelt.

Die Auskoppelanordnung 17' weist eine Mehrzahl an diffraktiven Auskoppelelementen 24' und eine Mehrzahl an diffraktiven Auskoppelelementen 23' auf, die alternierend entlang des Lichtleiters 20' angeordnet sind, wie in Fig. 11 beispielhaft gezeigt ist. Die einzelnen Auskoppelelemente 24' und 23' sollten jeweils eine Ausdehnung von etwa 1 mm aufweisen. Die Ausdehnung ist für ein kopfgetragenes optischen Systems durch den Pupillendurchmesser des Betrachters limitiert. Die Pupille weist in etwa einen Durchmesser von 3-4 mm auf. Um beide Teilbilder gleichzeitig sichtbar zu machen, muss die Ausdehnung kleiner als der Pupillendurchmesser gewählt sein (Pupillenteilung). Andererseits limitiert die Ausdehnung der Auskoppelelemente die optische Auflösung des übertragenen Bildes, so dass eine möglichst große Ausdehnung wünschenswert ist. Es hat sich gezeigt, dass eine Ausdehnung von 0,6 mm - 1,5 mm einen idealen Kompromiss bezüglich Auflösung und Homogenität des Seheindrucks vermittelt.

In Figur 11 weisen die Einkoppelelemente und Auskoppelelemente jeweils dieselbe Gitterperiode auf. In einer weiteren Ausführungsform können beiden Auskoppelelemente 23' und 24' als ein sinusförmiges Gitter ausgelegt sein. Somit ist sichergestellt, das an jedem Ort das Auskoppelelement Licht von beiden Teilfeldern 12a' und 12b' mit einer mittleren Effizienz auskoppelt. Die oben angesprochenen Nachteile der Pupillenteilung und Homogenität des Seheindrucks werden dadurch vermieden. Die genaue Furchenform des sinusförmigen Gitters kann dabei über den Auskoppelbereich symmetrisch variieren, um eine homogene Auskopplung über den gesamten Auskoppelbereich sicherzustellen. Dabei erhöht man jeweils die Effizienz der Auskopplung der Lichtstrahlen des im Lichtweg weiter entfernt liegenden Teilbildes, beispielsweise ist das Auskoppelelement im linken Bereich ähnlich der Form eines Blaze-Gitters für die Strahlung der rechten Feldhälfte 12b' ausgelegt (vergleichbar 24'), im rechten Bereich dagegen ähnlich der Form eines Blaze-Gitters für die Strahlung der linken Feldhälfte 12a' ausgelegt (vergleichbar 23'), in der Mitte wie ein symmetrisches Sinusgitter und dazwischen jeweils ein kontinuierlicher Übergang.

Insgesamt entsteht eine symmetrische Anordnung des optischen Systems 10', und in Kombination mit dem Farb-Multiplexing gemäß Fig. 8 halbiert sich die Anzahl an Lichtleitern der Lichtleiteranordnung 15', das heißt es werden bei einer Aufteilung des Wellenlängenspektrums in drei separat übertragene Wellenlängenbereiche insgesamt nur drei Lichtleiter benötigt.

Die zuvor beschriebenen Lichtleiteranordnungen 15 und 15' sind jeweils als plane Lichtleiteranordnungen ausgebildet. Dies vereinfacht die Berechnung und Optimierung der Einkoppelelemente 18 bzw. 18' sowie 19 bzw. 19' und der Auskoppelelemente 23 bzw. 23' und 24 bzw. 24' im Hinblick auf ihre Beugungseigenschaften für den oben beschriebenen Einsatz. Für eine Integration der optischen Systeme 10 bzw. 10' in eine vom Nutzer getragene Brille, die üblicherweise gekrümmte Gläser aufweist, ist es jedoch wünschenswert, dass die Lichtleiteranordnungen 15 bzw. 15' gekrümmt sein können.

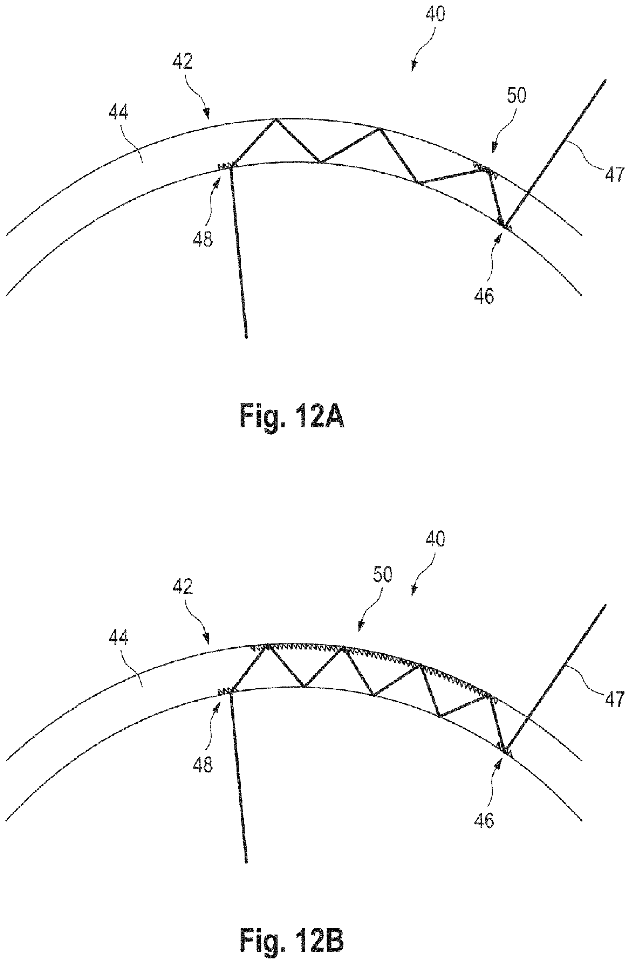

Beispiele von optischen Systemen 40 mit einer gekrümmten Lichtleiteranordnung 42 mit einem gekrümmten Lichtleiter 44 sind in Fig. 12A bis 12E gezeigt. Licht 47, das von einem nicht dargestellten Quellbild kommt, wird über eine Einkoppelanordnung 46 in den Lichtleiter 44 eingekoppelt und über eine Auskoppelanordnung 48 aus diesem wieder ausgekoppelt. Zwischen der Einkoppelanordnung 46 und der Auskoppelanordnung 48 befindet sich eine Korrekturanordnung 50, die dazu ausgelegt ist, geometrische und/oder chromatische Aberrationen der Wellenfront, die durch die Totalreflexionen entlang des gekrümmten Verlaufs der Lichtleiteranordnung 42 verursacht sind, zu korrigieren.

Die Korrekturanordnung 50 ist hier eine diffraktive Korrekturanordnung, die eine Beugungsgitterstruktur aufweist. Im Vordergrund der Ausgestaltung steht bei der Korrekturanordnung 50 die Korrekturwirkung auf die Wellenfrontaberrationen. Die Beugungsgitterstruktur der Korrekturanordnung kann entsprechend der zu korrigierenden Abbildungsfehler berechnet werden. Fig. 12A bis 12E zeigen verschiedene Beispiele von Korrekturanordnungen 50.

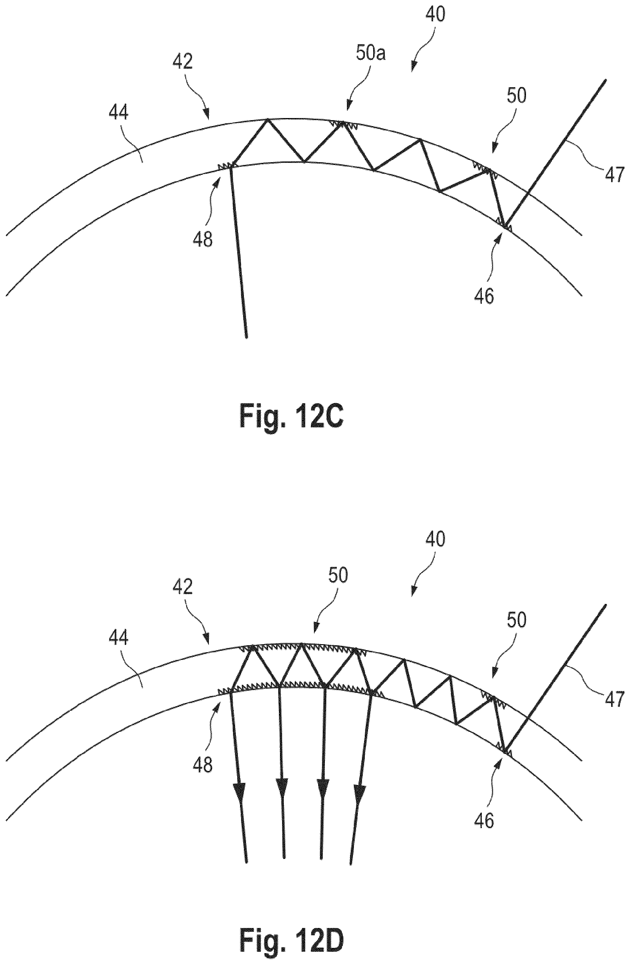

In einem ersten Beispiel gemäß Fig. 12A einer nur abschnittsweise ausgelegten Korrekturanordnung 50 kompensiert die Korrekturanordnung 50 die kumulativen Wellenfrontaberrationen, die an den auch mehreren Reflektionen im gekrümmten Lichtleiter 44 entstehen. Eine weitere nur abschnittsweise ausgelegte Korrekturanordnung 50 ist in Fig. 12C gezeigt. Hier ist es beispielsweise möglich, das Korrekturgitter 50a für die Farbkorrektur und das Korrekturgitter 50 für die geometrische Korrektur der Wellenfront auszulegen.

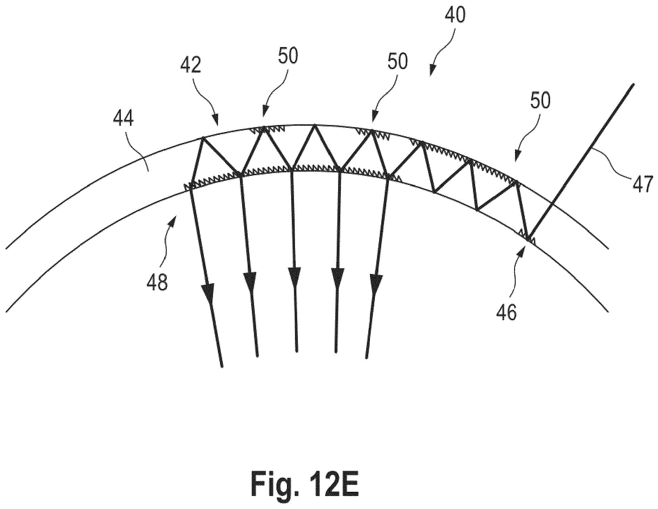

In einem weiteren Beispiel gemäß Fig. 12B ist die Korrekturanordnung 50 über die ganze Fläche des gekrümmten Lichtleiters 44 ausgeführt. Dies ermöglicht eine stückweise Kompensation der im gekrümmten Lichtleiter 44 erzeugten Wellenfrontaberrationen, beispielsweise der durch die jeweils direkt vorangehende oder direkt nachfolgende Reflektion im gekrümmten Lichtleiter erzeugten Wellenfrontaberration. Insbesondere werden somit Aberrationen durch die Korrekturanordnung 50 korrigiert, die infolge des gekrümmten Lichtleiters von einer Auskoppelstelle zur nächsten entstehen, (siehe hierzu auch die Beispiele in Fig. 12D und E, in denen mehrere ausgekoppelte Lichtstrahlen gezeigt sind). Damit ist innerhalb eines Bereichs, in dem Licht über mehrere Auskoppelstellen ausgekoppelt wird, eine vollständige Korrektion des Abbildungsstrahlengangs sichergestellt und dem Betrachter wird an jeder Auskoppelstelle ein korrigiertes Bild des Quellbildes dargeboten. Fig. 12D und 12E zeigen Beispiele für eine sich zumindest abschnittsweise auch über den Auskoppelbereich 48 erstreckende Korrekturanordnung 50.

Die Korrekturanordnung 50 kann sowohl für die (in Bezug auf den Krümmungsradius) innere als auch für die äußere Fläche oder für beide Flächen des gekrümmten Lichtleiters ausgelegt werden. Die Wirkung des gekrümmten Lichtleiters auf Wellenfrontaberrationen und eventuell induzierte Farbaberrationen können in einem selben Gitter oder in einem zweiten Gitter der Korrekturanordnung korrigiert werden.

Aufgrund des Korrekturelements 50 können die Einkoppelanordnung 46 und die Auskoppelanordnung 48 vorteilhafterweise wie für eine plane Lichtleiteranordnung berechnet werden, wie sie bei den vorherigen Beispielen gezeigt ist.

Der vorstehend beschriebene Aspekt kann bei den Beispielen gemäß Figuren 9 bis 11 vorgesehen werden, so dass die Lichtleiteranordnungen 15 bzw. 15' auch gekrümmt sein können.

Der vorliegende Aspekt kann jedoch auch unabhängig von den in Verbindung mit den Figuren 9 bis 11 beschriebenen Aspekten eingesetzt werden.

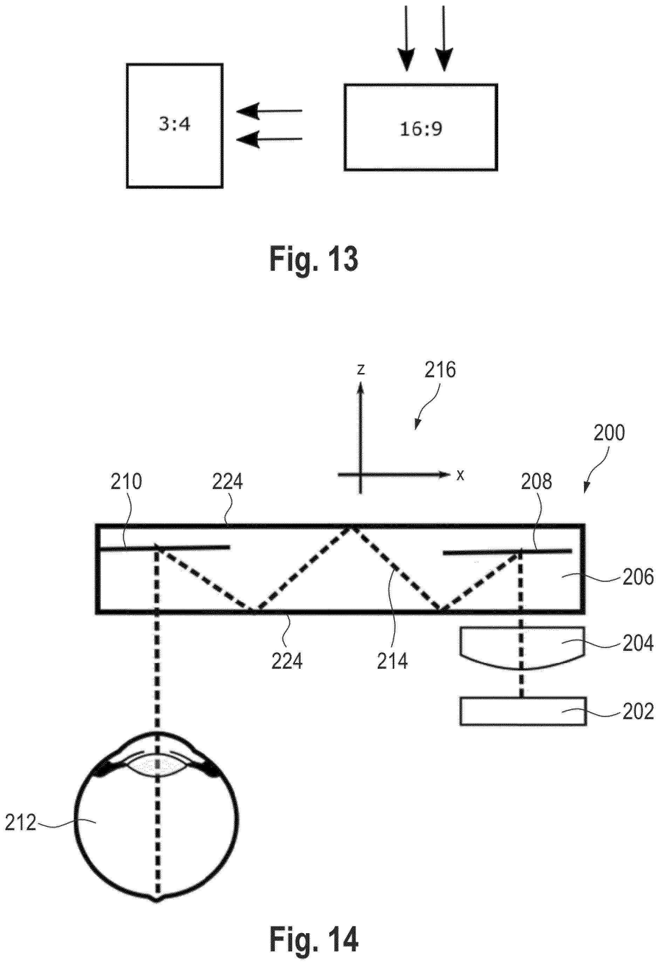

Nachfolgend werden mit Bezug auf die Figuren 13 bis 30 weitere Aspekte und Ausführungsbeispiele von optischen Systemen zur Übertragung eines Quellbildes beschrieben. Soweit nachfolgend die räumlichen Zuordnungen "oben", "unten", "seitlich", "links", "rechts" verwendet werden, so sind diese Begriffe lediglich aus Gründen des einfacheren Verständnisses gewählt. Diese räumlichen Begriffe beziehen sich auf den Fall, dass ein optisches System zum Übertragen eines Quellbildes von einem Benutzer am Kopf, beispielsweise in der Art einer Brille, getragen wird.

In der vorangehenden Beschreibung ist jeweils eine Begrenzung eines erreichbaren Sichtfeldes bzw. Feldwinkels von beispielsweise 20° genannt. Diese Begrenzung gilt, wie aus der vorangehenden Beschreibung ersichtlich, in der Richtung, in der das Licht in die Lichtleiteranordnung eingekoppelt und entlang der Lichtleiteranordnung geführt wird. In dieser Richtung unterliegt die Führung des Lichts den Bedingungen der Totalreflexion, wie oben beschrieben wurde. Diese Richtung wird auch als die kritische Richtung bezeichnet. Es versteht sich, dass das Sichtfeld bzw. der Bildfeldwinkel des übertragenen Quellbildes nur in der kritischen Richtung limitiert ist. In der anderen, dazu senkrechten Richtung kann der Bildfeldwinkel größer werden.

Fig. 13 zeigt erreichbare Bildfelder im Portraitformat "3:4" und im Landschaftsformat "16:9" bei unterschiedlichen, mit Pfeilen angedeuteten Einkoppelrichtungen bzw. kritischen Richtungen.

Für eine Darstellung im Portraitformat mit Aspektverhältnis 3:4 ergibt sich bei einer Einkopplung von rechts oder links für typische Materialien der Lichtleiteranordnung ein maximales Bildfeld von etwa 20° x 27° mit einer Diagonale von 33°. In diesem Fall ist die kritische Richtung die horizontale Richtung. Für eine Darstellung im Landschaftsformat mit Aspektverhältnis 16:9 ergibt sich bei einer Einkopplung von oben bzw. unten ein maximales Bildfeld bzw. Sichtfeld von 36° x 20° mit einem diagonalen Sichtfeld von 41°. In diesem Fall ist die kritische Richtung die vertikale Richtung. Die Grenze gilt dabei jeweils für Lichtleiteranordnungen mit Lichtleitern aus Polycarbonaten mit einer Brechzahl von 1,588, mit Episulfiden wie PTU mit Brechzahlen von bis zu 1,78 sind etwa um 10° größere Sichtfelder erreichbar. Durch das erfindungsgemäße Prinzip des Zusammensetzens mehrerer Feldwinkelbereiche bzw. Teilfelder des Quellbildes sind größere Sichtfelder bzw. Feldwinkel erreichbar. So können im Landschaftsformat mit der vertikalen Richtung als kritischer Richtung beispielsweise etwa 60° x 34° mit einer Diagonale von 80° erreicht werden.

Fig. 14 zeigt eine Prinzipskizze eines optischen Systems 200 zur Übertragung eines Quellbildes in einer Anordnung für das rechte Auge bei einer seitlichen horizontalen Einkopplung eines Quellbildes. Licht eines Displays bzw. Quellbildes 202 wird über eine Optik 204 auf ein in einem Lichtleiter 206 angeordnetes Einkoppelelement 208 gerichtet, mittels Totalreflexion durch den Lichtleiter 206 geführt und über ein Auskoppelelement 210 in das rechte Auge 212 des Benutzers ausgekoppelt.

Das Licht ausgehend vom Quellbild 202 bis in das Auge 212 des Benutzers ist mit einer unterbrochenen Linie 214 veranschaulicht. Ein Koordinatensystem 216 in Fig. 14 zeigt die Richtung der x-Achse und der z-Achse an. Letztere gibt die Blickrichtung des Auges an. Gemäß der vorherigen Definition spannen die x-Achse und die z-Achse eine horizontale Ebene auf. Fig. 14 ist somit eine Draufsicht auf das System 200 von oben nach unten.

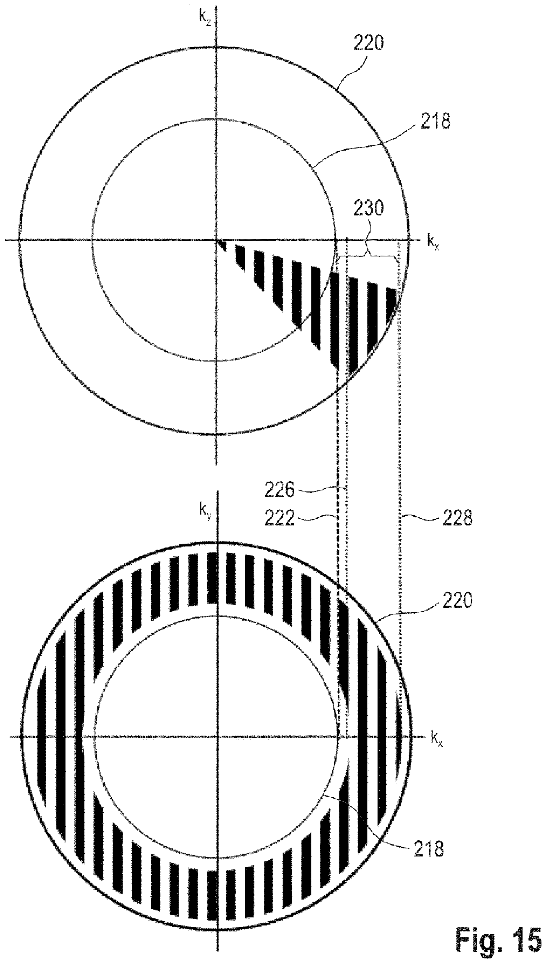

Fig. 15 zeigt die im Lichtleiter 206 übertragbaren Feldwinkel im Raumfrequenz- oder k-Raum. Die Indizes "x" und "z" beziehen sich auf das Koordinatensystem 216 in Fig. 14. Die folgende Betrachtung gilt für eine Wellenlänge $\lambda$. Das obere Teilbild in Fig. 15 zeigt einen Schnitt durch die Ewald-Kugeln in der $k_z$-$k_x$-Ebene, und das untere Teilbild in Fig. 15 einen Schnitt durch die Ewald-Kugeln in der vertikalen $k_y$-$k_x$-Ebene.

Der kleine Kreis 218 mit Radius $2\pi/\lambda$ stellt jeweils einen Schnitt durch die Ewald-Kugel des Lichtes außerhalb des Lichtleiters 206 mit Brechzahl 1 dar. Der große Kreis 220 mit Radius $n2\pi/\lambda$ stellt jeweils einen Schnitt durch die Ewald-Kugel des Lichtes innerhalb des Lichtleiters 206 mit Brechzahl n dar. Damit das Licht im Lichtleiter 206 durch Totalreflexion geführt wird, muss die x-Komponente des K-Vektors im Lichtleiter 206 größer als $2\pi/\lambda$ sein. Dieser Grenzwinkel ist durch eine senkrechte gestrichelte Linie 222 dargestellt. Das geführte Winkelspektrum des Lichts des 214 erstreckt sich dann bis zu einem Ausbreitungswinkel parallel zur Grenzfläche 224 (Fig. 14) des Lichtleiters 206. Aus praktischen Gründen wählt man für das geführte Licht 214 einen etwas kleineren Winkelbereich, beispielsweise als kleinsten Winkel einen Winkel, der um 5° größer ist als der Grenzwinkel der Totalreflexion, und als größten Winkel einen Winkel, der um 15° kleiner ist als der Winkel parallel zu den Grenzflächen, wie oben beispielsweise mit Bezug auf Figuren 5 bis 7 bereits beschrieben wurde. Diese beiden Grenzwinkel sind durch punktierte Linien 226, 228 dargestellt.

Damit ergibt sich ein im Lichtleiter 206 geführter Winkelbereich im k-Raum, der in der kritischen Richtung (Horizontale) auf einen Winkelbereich eingeschränkt ist, der in dem oberen Teilbild in Fig 15 mit schraffierten Linien dargestellt und mit dem Bezugszeichen 230 versehen ist. In der nicht-kritischen Richtung (x-y-Ebene, unteres Teilbild in Fig. 15) bestehen keine Einschränkungen, da das Licht in jeder Richtung im Lichtleiter 206 durch Totalreflexion geführt wird.

Das in dem Winkelbereich 230 durch den Lichtleiter 206 geführte Winkelspektrum kann nun durch ein geeignetes Auskoppelelement 210, beispielsweise in Form eines Lineargitters, aus dem Lichtleiter 206 herausgebeugt und dem Auge 212 des Betrachters zugeführt werden. Dies ist in den nachfolgend zu beschreibenden weiteren Figuren dargestellt.

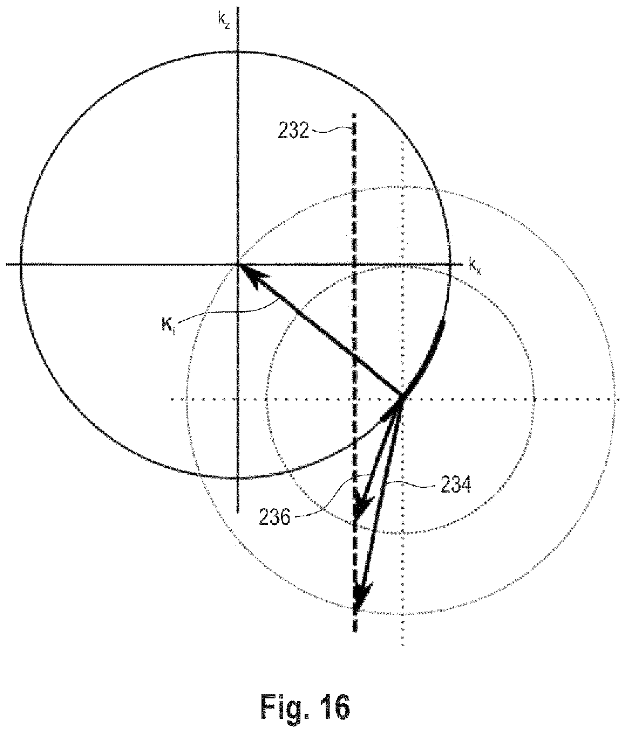

Zunächst ist in Fig. 16 ein auf das Auskoppelelement 210 in Form eines Auskoppelgitters einfallender Wellenvektor $K_i$ gezeigt. Für die Beugung am Gitter muss die Laue-Gleichung erfüllt sein:

$$K_s - K_i = G$$

Der am Gitter gebeugte Wellenvektor $K_s$ darf sich also vom einfallenden Wellenvektor $K_i$ nur um einen Gittervektor G unterscheiden. Für den Fall, dass das Auskoppelelement 210 ein monofrequentes Lineargitter ist, das parallel zur Oberfläche 224 des Lichtleiters 206 liegt, liegen die möglichen Gittervektoren für jeweils eine Beugungsordnung des Auskoppelgitters auf einer senkrechten Linie 232. Der gebeugte Wellenvektor $K_s$ (Pfeil 234) endet ausgehend vom Ende des einfallenden Wellenvektors $K_i$ auf einem Schnittpunkt der Ewald-Kugel mit Radius $n2\pi/\lambda$ und der senkrechten Linie 232 der möglichen Gittervektoren. Durch die Brechung an der Grenzfläche 224 des Lichtleiters 206 ändert sich die Transversalkomponente des Wellenvektors nicht, so dass der Wellenvektor des Lichtes außerhalb des Wellenleiters 206 ausgehend vom Ende des einfallenden Wellenvektors $K_i$ auf einem Schnittpunkt der Ewald-Kugel mit Radius $2\pi/\lambda$ und der senkrechten Linie 232 der möglichen Gittervektoren endet, wie mit einem Pfeil 236 dargestellt. Mit dieser Konstruktion gemäß Fig. 16 lässt sich, wie im Folgenden ausgeführt wird, der von einem Lichtleiter wie der Lichtleiter 206 mit einem Auskoppelelement 210 in Form eines Lineargitters übertragene Feldwinkel darstellen.

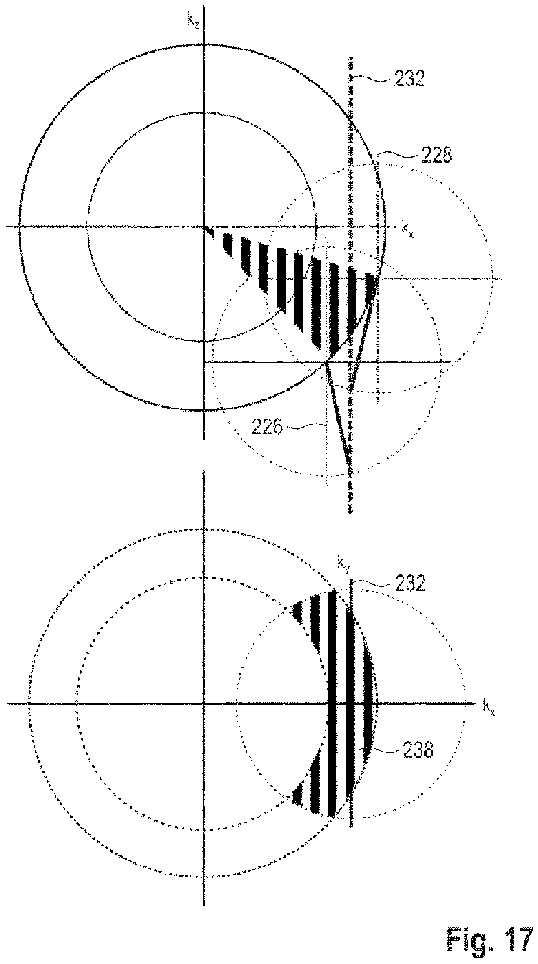

Hierzu zeigt Fig. 17 die k-Raum-Darstellung wie in Fig. 15, wobei zusätzlich die Linie 232 der möglichen Gittervektoren und die Linien 226 und 228 der Grenzwinkel des übertragenen Feldwinkelbereichs außerhalb des Lichtleiters 206 dargestellt sind. Im unteren Teilbild von Fig. 17 ist der übertragene Feldwinkelbereich anhand der k-Raum-Darstellung in der Projektion dargestellt. Der übertragene Feldwinkelbereich ergibt sich aus dem Überlapp der Projektion der Ewald-Kugel mit Radius $2\pi/\lambda$, die um die Gitterfrequenzlinie 232 zentriert ist, und dem im Lichtleiter 206 geführten Winkelbereich aus Fig. 15. Der Feldwinkelbereich ist damit an jeder Seite (in Richtung der x-Achse) bogenförmig begrenzt und weist insgesamt eine gebogene Form auf, wie im unteren Teilbild von Fig. 15 mit dem schraffierten Bereich gezeigt ist. Der schraffierte Bereich stellt den übertragbaren Feldwinkelbereich dar.

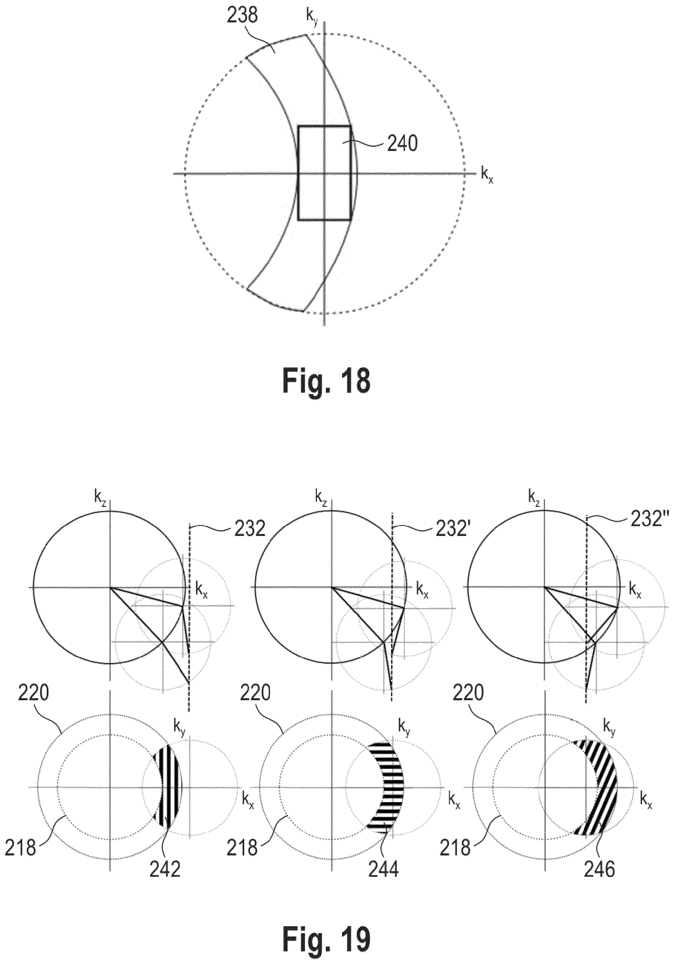

Fig. 18 zeigt ein in den übertragbaren bogenförmigen Feldwinkelbereich 238 eingezeichnetes Rechteck 240 mit Seitenverhältnis 16:9 (Hochformat). Ein rechteckiger Feldwinkelbereich mit Seitenverhältnis 16:9 beträgt bei Verwendung von Polycarbonat und den oben angegebenen Winkelabständen zu dem jeweiligen Grenzwinkel etwa 20° x 35°, was einer Bilddiagonale von etwa 40° entspricht.

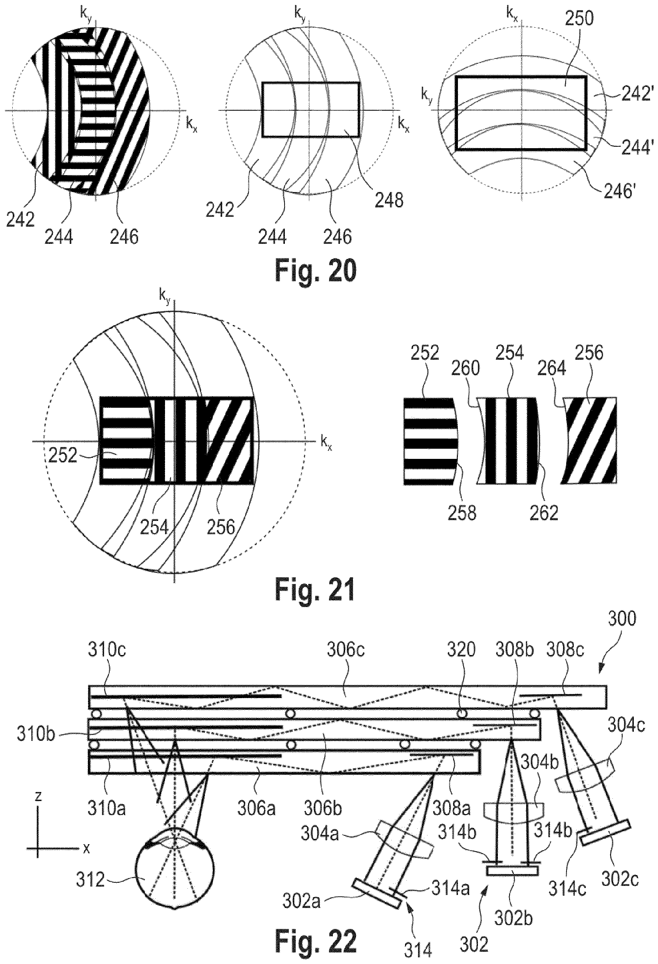

Die bisherigen Betrachtungen bezogen sich auf eine bestimmte Gitterperiode bzw. Gitterfrequenz des Auskoppelgitters 210 in Fig. 14. Über die Auslegung des Auskoppelgitters kann der übertragbare Feldwinkelbereich verändert werden. Dies ist in Fig. 19 für drei verschiedene Auskoppelgitter mit drei unterschiedlichen Gitterperioden von jeweils 60 % der Wellenlänge λ, 78 % der Wellenlänge λ und 107 % der Wellenlänge λ (im Vakuum) gezeigt, wobei anstelle des einen Lichtleiters 206 in Fig. 14 drei Lichtleiter vorhanden sind, die in Richtung der z-Achse hintereinander angeordnet sind (wie beispielsweise in Fig. 22 gezeigt), wobei jedem dieser Lichtleiter eines der vorstehend genannten Auskoppelgitter zugeordnet ist.

Fig. 19 zeigt eine derartige Ausführung eines dreifach-Multiplexing im Winkelraum, das heißt Aufteilung des Quellbildes in drei Teilfelder, bei Einkopplung der Teilfelder von der Seite (wie in Fig. 14 für das nicht aufgespaltene Quellbild 202 gezeigt, bzw. wie in Fig. 22 gezeigt). Fig. 19 zeigt dabei das Beispiel eines Winkelraumdiagramms für das rechte Auge wie in Fig. 14. Die obere Reihe von Teilbildern in Fig. 19 zeigt die Winkelraumbetrachtung in einem Querschnitt zum jeweiligen Lichtleiter, die untere Reihe stellt eine Winkelbetrachtung in Blickrichtung (z-Achse), also senkrecht zum jeweiligen Lichtleiter bzw. der Lichtleiteranordnung dar. Die Kreise 220 sind jeweils die Projektionen der Ewald-Kugeln innerhalb (große Kreise mit Radius n2π/λ) und die Kreise 218 außerhalb (kleine Kreise mit Radius 2π/λ) des jeweiligen Lichtleiters. Die gestrichelten senkrechten Linien 232, 232' und 232" in der oberen Reihe von Teilbildern in Fig. 19 stellen die Frequenzlinie des jeweiligen Auskoppelgitters dar. Nach rechts bzw. links in Fig. 19 erstreckt sich jeweils die Ein- bzw. Auskoppelrichtung. Dargestellt ist das Beispiel der Auskopplung über ein jeweiliges Auskoppelgitter in Transmission. Die Richtungen nach oben und unten in den Teilbildern der unteren Reihe von Fig. 19 bezeichnet man auch als die konischen Beugungsrichtungen. Die jeweils übertragenen unterschiedlichen Feldwinkelbereiche in den unteren drei Teilbildern ergeben sich aus den jeweiligen Schnittlinien der Grenzwinkel im jeweiligen Lichtleiter und den um die Gitterfrequenz verschobenen kleinen Kreisen. Über die Ausnutzung der konischen Beugung werden die maximal übertragbaren Feldwinkelbereiche bogenförmig.

Wie aus der unteren Reihe von Teilbildern in Fig. 19 hervorgeht, sind die übertragbaren Feldwinkelbereiche für die drei unterschiedlichen Gitterperioden der jeweiligen Auskoppelgitter im k-Raum seitlich zueinander versetzt.

Wie bereits erwähnt, entspricht die Darstellung in Fig. 19 der Darstellung in Fig. 17 für drei unterschiedliche, jedoch leicht überlappenden Feldbereiche eines Quellbildes, die durch hintereinander angeordnete Lichtleiter mit drei unterschiedlichen Gitterperioden des jeweiligen Auskoppelgitters von jeweils 60 % der Wellenlänge, 78 % der Wellenlänge und 107 % der Wellenlänge (im Vakuum), übertragen werden sollen. Beispielsweise für eine Wellenlänge von 550 nm ergeben sich somit Gitterperioden des jeweiligen Auskoppelgitters von etwa 330 nm, 430 nm und 590 nm.

Fig. 20 zeigt im linken Teilbild die drei unterschiedlichen jedoch leicht überlappenden Feldbereiche 242, 244 und 246, wie sie zu einem Gesamtbild zusammengefügt vom Betrachter wahrgenommen werden.

In dem mittleren Teilbild von Fig. 20 ist ein Rechteck 248 mit einem Aspektverhältnis 16:9 eingezeichnet, das einen gesamten Feldwinkelbereich bzw. ein Bildfeld oder Sichtfeld darstellt, das bei Einkopplung von drei Teilfeldern entsprechend den Feldwinkelbereichen 242, 244, 246 des Quellbildes von der Seite in horizontaler Richtung (wie beispielsweise in Fig. 14 oder 22 gezeigt) übertragen werden kann. Der gesamte Feldwinkelbereich bzw. das Bild, das bei dieser Anordnung übertragen werden kann, hat eine Größe von 62° x 35°, was einer Bilddiagonalen von etwa 71° entspricht.

Das rechte Teilbild von Fig. 20 zeigt mit einem Rechteck 250 einen gesamten Feldwinkelbereich, der bei Einkopplung von drei Teilfeldern entsprechend den Feldwinkelbereichen 242', 244', 246' von oben bzw. unten, das heißt vertikal und mit einem Aspektverhältnis 16:9 übertragbar ist. Die Darstellung im rechten Teilbild von Fig. 20 ist dafür um 90° gedreht. Der gesamte Feldwinkelbereich, der bei dieser Anordnung übertragen werden kann, beträgt 100° x 56°, was einer Bilddiagonalen von etwa 115° entspricht.

Diesen Zusammenhängen folgend beruht ein erfindungsgemäßes optisches System und Verfahren zum Übertragen eines Quellbildes nun darauf, das Quellbild in zumindest zwei Teilfelder aufzuspalten, von denen zumindest eines vor der Einkopplung in die Lichtleiteranordnung zumindest teilweise bogenförmig berandet ist. Wie aus den vorangehenden Erläuterungen nämlich hervorgeht, können besonders große Sichtfelder erhalten werden, wenn die Feldwinkelbereiche zumindest an einer Seite bogenförmig berandet sind. Dies ist in Fig. 21 nochmals schematisch dargestellt, für drei Feldwinkelbereiche 252, 254, 256, die aneinandergereiht ein maximales Sichtfeld ergeben. Da die für jeden Lichtleiter übertragbaren Feldwinkelbereiche bogenförmig sind, kann ein größerer gesamter Feldwinkelbereich bei der Übertragung erreicht werden, wenn die einzelnen übertragbaren Bereiche vollständig ausgenutzt werden. Dies kann erfindungsgemäß erreicht werden, wenn die aneinander angrenzenden Feldwinkelbereiche zumindest an einer zum Überlapp zu bringenden Begrenzung der einzelnen Feldwinkelbereiche bogenförmig ausgelegt sind. Im rechten Teilbild von Fig. 21 sind dazu die drei Feldwinkelbereiche 252, 254, 256 dargestellt, die zusammen den im linken Teilbild von Fig. 21 bzw. im mittleren Teilbild von Fig. 20 ausgeführte gesamten Feldwinkelbereich von 62° x 35° ergeben. Die Aufspaltung des Quellbildes kann somit beispielsweise wie in Fig. 21 im rechten Teilbild gezeigt in drei Teilfelder erfolgen, und zwar das erste Teilfeld 252, das zweite Teilfeld 254 und das dritte Teilfeld 256, wobei ein Feldrand 258 des Teilfeldes 252 und ein Feldrand 260 des Teilfeldes 254 sowie ein weiterer Feldrand 262 des Teilfeldes 254 und ein Feldrand 264 des Teilfeldes 256 jeweils konkav oder konvex bogenförmig ausgebildet sind. Wie aus dem rechten Teilbild von Fig. 21 hervorgeht, sind die Radien der bogenförmigen Feldränder 258 bis 264 nicht identisch, so dass sich die Teilfelder 252, 254 und 256 wie im linken Teilbild von Fig. 21 gezeigt teilweise überlappen sollten. Die Feldränder 258 und 260 sind dabei einander unmittelbar benachbart, und ebenso die bogenförmigen Feldränder 262 und 264.

Das Prinzip der Aufspaltung des Quellbildes in zumindest zwei Teilfelder, von denen zumindest eines, vorzugsweise beide auf ihren einander zugewandten Feldrändern bogenförmig sind, lässt sich selbstverständlich auch bei den Beispielen gemäß Fig. 9 und 10 anwenden, ebenso bei dem Beispiel in Fig. 11, wobei für Letzteres später noch eine Variante beschrieben wird.

Fig. 22 zeigt ein Ausführungsbeispiel eines optischen Systems 300 zum Übertragen eines Quellbildes 302, das ebenfalls von dem zuvor beschriebenen erfindungsgemäßen Prinzip Gebrauch macht.

Das optische System 300 in Fig. 22 ist in Draufsicht von oben gezeigt.

Das optische System 300 weist drei Lichtleiter 306a, 306b und 306c auf, die in Richtung der z-Achse (siehe Koordinatensystem in Fig. 22) hintereinander angeordnet sind. Dem Lichtleiter 306a ist ein Einkoppelelement 308a und ein Auskoppelelement 310a zugeordnet. Dem Lichtleiter 306b ist ein Einkoppelelement 308b und ein Auskoppelelement 310b zugeordnet. Dem Lichtleiter 306c ist ein Einkoppelelement 308c und ein Auskoppelelement 310c zugeordnet.

Jeder der Lichtleiter 306a bis 306c überträgt ein Teilfeld des Quellbildes 302, das heißt einen jeweiligen Feldwinkelbereich des Feldwinkelspektrums des Quellbildes 302, wobei die Feldwinkelbereiche voneinander zumindest teilweise verschieden sind, wie beispielsweise in Fig. 21 gezeigt ist.

In Fig. 22 ist das Auge 312 eines Betrachters gezeigt, der, durch Auskopplung der übertragenen Teilfelder des Quellbildes 302 aus den Lichtleitern 306a, 306b, 306c, das vollständige Quellbild 302 durch Zusammensetzung der drei übertragenen Teilfelder wahrnehmen kann. In den Lichtleitern 306a, 306b, 306c wird jeweils ein Winkelbereich zwischen etwa 45° und 75° des geführten Lichtes genutzt. Die Einkoppelelemente 308a, 308b, 308c und die Auskoppelelemente 310a, 310b, 310c sind als Beugungsgitter ausgeführt, wobei die Gitterperioden der Einkoppelelemente 308a, 308b, 308c untereinander unterschiedlich sind, und die Gitterperioden der Auskoppelelemente 310a, 310b, 310c sind ebenfalls untereinander verschieden. Die Gitterperioden der zueinander zugehörigen Auskoppelelemente und Einkoppelelemente ist dagegen gleich. In dem gezeigten Ausführungsbeispiel sind die Einkoppelelemente 308a, 308b, 308c und die Auskoppelelemente 310a, 310b, 310c als vergrabene Beugungsgitter in den Lichtleitern 306a, 306b, 306c ausgeführt.

Des Weiteren sind in Fig. 22 Optiken 304a, 304b und 304c gezeigt. Das Quellbild 302 wird in dieser Ausgestaltung dreifach bereitgestellt, entsprechend dreier identischer Quellbilder 302a, 302b und 302c. Es wird jedoch von jedem Quellbild 302a, 302b, 302c nicht der volle Feldwinkelbereich in den jeweiligen Lichtleiter 306a, 306b, 306c eingekoppelt, sondern von jedem der untereinander identischen Quellbilder 302a, 302b, 302c wird nur ein einseitig oder beidseitig bogenförmig berandetes Teilfeld in den jeweiligen Lichtleiter 306a, 306b, 306c eingekoppelt. Mit anderen Worten wird das Quellbild 302 in drei Teilfelder mit unterschiedlichen Feldwinkelbereichen aufgespalten. Entsprechend weist das optische System 300 eine Vorrichtung 314 zum Aufspalten des rechteckigen Quellbildes 302 in drei Teilfelder auf. Die Vorrichtung 314 weist hierzu eine optische Anordnung mit drei Feldblenden 314a, 314b und 314c auf, wobei die Feldblenden 314a, 314b und 314c entsprechend den bogenförmigen Feldrändern 258, 260, 262, 264 bogenförmig berandet sind.

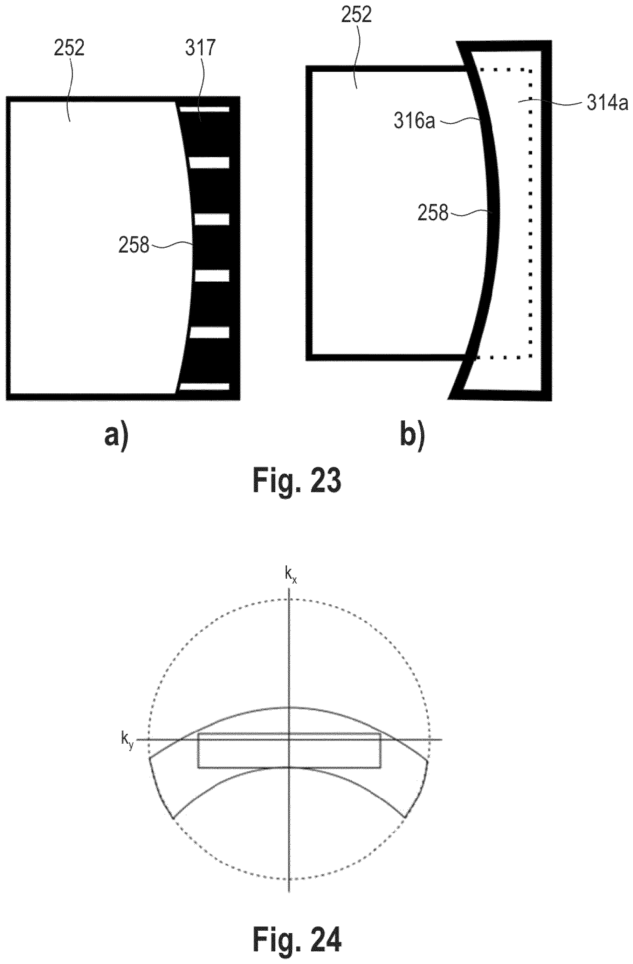

In Fig. 23b) ist die Feldblende 314a beispielhaft gezeigt. Die Feldblende 314a weist einen bogenförmigen Rand 316a auf, mit dem das Teilfeld 252 mit dem bogenförmigen Feldrand 258 erzeugt wird. Die Feldblende 314b weist entsprechend den Feldrändern 260 und 262 entsprechend beidseitig einen bogenförmigen Rand auf, und die Feldblende 314c weist einen bogenförmigen Rand auf, der zur Erzeugung des Teilfeldes 256 mit dem bogenförmigen Feldrand 264 dient.

Alternativ zu einer Erzeugung bogenförmig berandeter Feldwinkelbereiche mittels Feldblenden kann die Aufteilung des Quellbildes 302 in die Teilfelder auch elektronisch realisiert werden, indem die entsprechenden Pixel des jeweiligen Quellbildes 302a, 302b, 302c (jeweils ein Display), die nicht übertragen werden sollen, entsprechend nicht oder so angesteuert werden, das sie dunkel bleiben. In Fig. 23a) ist der Bereich der nicht angesteuerten Pixel mit dem Bezugszeichen 317 versehen.

Wieder mit Bezug auf Fig. 22 ist anzumerken, dass die Dicke der Lichtleiter 306a, 306b und 306c prinzipiell sehr gering sein kann, beispielsweise 200 μm. Aus praktischen Gründen kann eine größere Dicke vorteilhaft sein, beispielsweise eine Dicke von 500 μm für jeden der Lichtleiter 306a, 306b, 306c. Die Lichtleiter 306a, 306b, 306c sollten mit einem Luftabstand von mindestens wenigen Mikrometern entfernt gelagert werden, beispielsweise von 5 μm. Dies kann über kleine Abstandshalter 320 erreicht werden, die als kleine Kügelchen oder andere Strukturen auf den Lichtleitern 306a, 306b, 306c realisiert sein können.

Auf diese Weise lassen sich auch bei dreifachem Feldstitching (das heißt Aufteilung des Quellbildes in drei Teilfelder) in Verbindung mit dreifachem Farbmultiplexing, wie mit Bezug auf Fig. 8 beschrieben wurde, mit dann insgesamt beispielsweise neun Lichtleitern relativ geringe Dicken unter 2 mm erreichen. Wenn zum Farbmultiplexen jeweils dieselben Lichtleiter genutzt werden und die Farben jeweils über die eingebetteten Gitter getrennt werden, reduziert sich die erforderliche Dicke weiter auf unter 2 mm.

Wird, wie in Fig. 20, rechtes Teilbild gezeigt, eine Einkopplung der Teilfelder des Quellbildes 302 in die Lichtleiter 306a, 306b, 306c von oben oder von unten realisiert, wird der übertragbare Gesamtfeldwinkelbereich noch größer, wie aus einem Vergleich des rechten Teilbildes in Fig. 20 mit dem mittleren Teilbild in Fig. 20 hervorgeht.

Verwendet man hingegen anstelle von bogenförmig berandeten Teilfeldern rechteckig begrenzte Teilfelder, wie in Fig. 24 gezeigt, so kann bei dreifachem Fieldstitching, das heißt einer Aufteilung des Quellbildes in drei rechteckige Teilfelder bei Einkopplung von oben in jedem Lichtleiter 306a, 306b, 306c nur ein Feldwinkel von maximal 80° x 15° übertragen werden, und man erhält durch Aneinanderreihung der drei Feldwinkelbereiche einen resultierenden Gesamtfeldbereich von nur 80° x 45° mit einer Diagonale von 92° gegenüber einem Feldbereich von 100° x 56° bei der erfindungsgemäßen Verwendung von bogenförmig berandeten Teilfeldern bzw. Feldwinkelbereichssegmenten. Beim Fieldstitching ist es daher vorteilhaft, bogenförmige Teilfelder zu übertragen und aneinanderzureihen. Damit können Quellbilder mit großen Feldwinkeln und somit großem Sichtfeld mit weniger Lichtleitern, beispielsweise nur zwei oder drei Lichtleitern, übertragen werden.

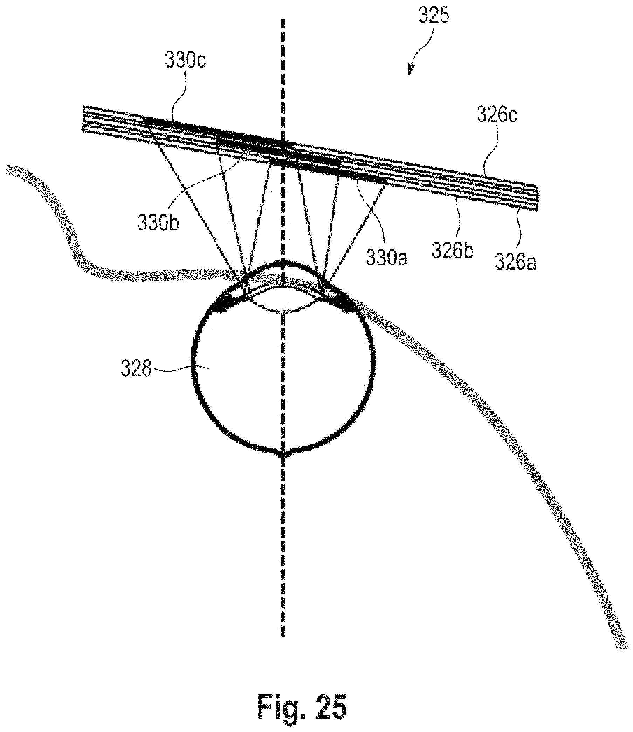

Fig. 25 zeigt einen weiteren Aspekt der Erfindung. Fig. 25 zeigt drei in Blickrichtung hintereinander angeordnete Lichtleiter 326a, 326b und 326c zur Übertragung von drei aneinander angrenzenden Feldwinkelsegmenten eines Quellbildes wie mit Bezug auf Fig. 22 beschrieben. Nicht dargestellt in Fig. 25 ist die Einkoppeloptik. Die Lichtleiter 326a, 326b, 326c leuchten die Eyebox des Auges 328 eines Betrachters aus, wobei die Eyebox die Fläche ist, die durch die über den gesamten Feldwinkel rollende Augenpupille überstrichen wird. Bei dem optischen System 325 sind drei Auskoppelelemente 330a, 330b, 330c vorgesehen, von denen jeweils eines dem jeweiligen Lichtleiter 326a, 326b, 326c zugeordnet ist. Die Auskoppelelemente 330a, 330b, 330c, die als Beugungsgitter ausgebildet sein können, sind gemäß diesem Aspekt der Erfindung zueinander versetzt angeordnet derart, dass für jeden Lichtleiter 326a, 326b, 326c und das durch diesen übertragene Feldwinkelsegment bzw. Feldwinkelbereich nur jeweils die Eyebox ausgeleuchtet wird. Durch die lateral begrenzte Ausführung in versetzter Anordnung der Auskoppelelemente 330a, 330b, 330c wird somit erreicht, dass weniger Licht verloren geht.

Aus ästhetischen Gründen ist ferner die Lichtleiteranordnung mit den Lichtleitern 326a, 326b, 326c vor dem Auge 328 geneigt angeordnet, und zwar um einen Winkel von beispielsweise zwischen 10° und 20°. Auch ist es möglich (nicht gezeigt), die planare Lichtleiteranordnung mit den Lichtleitern 326a, 326b, 326c in der anderen Richtung senkrecht zur Zeichenebene mit dem sogenannten pantoskopischen Winkel zwischen 10° und 20° zu neigen. Größere Neigungswinkel in beiden Richtungen sind technisch möglich, aber aus ästhetischen Gründen nicht zu bevorzugen.

Mit mehr als drei Lichtleitern bzw. Materialien mit höherer Brechzahl wie beispielsweise PTU (Polyurethan) oder Episulfiden mit Brechzahlen bis zu 1,76 kann über aneinander grenzende bogenförmigen Winkelbereiche beinahe der vollständige Halbraum übertragen werden. Somit sind auch Sichtfelder mit einer Diagonale über 115° möglich. Erfindungsgemäß kann in mindestens zwei Kanälen, das heißt in mindestens zwei Lichtleitern dabei ein an jeweils mindestens einer Seite bogenförmig begrenztes Feldwinkelsegment übertragen werden.

Wie oben beschrieben kann zur Übertragung großer Feldwinkelbereiche mit drei Farben für jeden Feldwinkelbereich und jede Farbe ein Lichtleiter mit entsprechenden Gittern eingesetzt werden. Bei drei Feldwinkelbereichen bzw. -segmenten und drei Farben kann ein erfindungsgemäßes optisches System daher mit neun Lichtleitern realisiert werden. Da die Lichtleiter dünn, beispielsweise 200 μm dünn, ausgeführt werden können, lässt sich damit eine dünne Lichtleiteranordnung mit einer Gesamtdicke von 2 mm für kopfgetragene optische Systeme realisieren. Allerdings führen die vielen Grenzflächen, beispielsweise 18 bei 9 Lichtleitern, zu hohen Reflexionsverlusten. Daher ist es vorteilhaft, die Lichtleiter mit Entspiegelungsschichten für das durchtretende Licht zu entspiegeln. Die Anforderungen an Entspiegelungsschichten können reduziert werden, wenn für jeden Feldwinkelbereich die Gitter für die drei Farbbereiche in einen Lichtleiter eingebettet werden. Somit reduziert sich die Anzahl der Lichtleiter auf drei mit nur sechs Grenzflächen. Hierbei nutzt man zum Farbmultiplexen jeweils dieselben Lichtleiter und trennt die Farben jeweils über unterschiedliche Gitter mit unterschiedlichen Gitterperioden für die verschiedenen Wellenlängen. Die Anzahl der Grenzflächen reduziert sich dadurch, jedoch sind im ausgeführten Beispiel neun Gitter erforderlich.

Für die polychromatische Übertragung ist es auch möglich, einen Lichtleiter mit einem Koppelgitter für einen ersten Feldwinkelbereich für eine erste Farbe und einen zweiten Feldwinkelbereich für eine zweite Farbe einzusetzen. So kann in Polycarbonat mit einer Gitterperiode von 430 nm - jeweils in der kritischen Koppelrichtung - bei einer Wellenlänge von 445 nm ein Feldwinkelbereich von 0° bis +20°, und bei einer Wellenlänge von 650 nm ein Feldwinkelbereich von -20° bis 0° übertragen werden. Damit kann die Anzahl der erforderlichen Koppelgitter für eine Übertragung großer Feldwinkel mit drei Farben verringert werden und die Transmission des Gesamtsystems erhöht werden. Beispielsweise ist es möglich, mit nur vier Koppelgittern und vier Lichtleitern statt neun Koppelgittern in drei Lichtleitern einen großen Spektralbereich zu übertragen.

Mit Bezug auf die weiteren Figuren wird eine weitere Ausführungsform eines erfindungsgemäßen optischen Systems beschrieben.

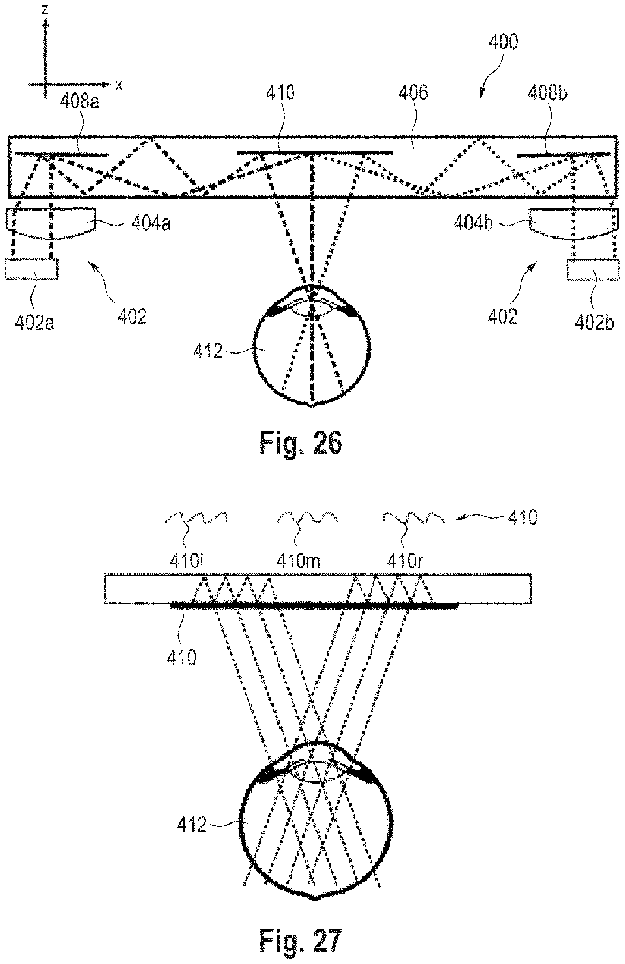

Fig. 26 zeigt ein optisches System 400 zum Übertragen eines Quellbildes, das ähnlich zu dem optischen System 10' in Fig. 11 ausgebildet ist.

Das System 400 dient zum Übertragen eines in zwei Teilfelder 402a und 402b aufgeteilen Quellbildes 402 in ein Auge 412 eines Betrachters. Den Teilfeldern 402a und 402b ist jeweils eine Optik 404a und 404b zugeordnet. Das System 400 weist einen einzelnen Lichtleiter 406 auf, in den die zwei Teilfelder 402a und 402b von entgegengesetzten Seiten des Lichtleiters 406 eingekoppelt werden, beispielsweise von oben und unten oder links und rechts.

Dem Lichtleiter 406 sind entsprechend an entgegengesetzten Seiten jeweils Einkoppelelemente 408a und 408b zugeordnet.

Der Aufbau des Systems 400 ist symmetrisch ausgeführt. Zur Auskopplung der beiden Feldwinkelbereiche der Teilfelder 402a, 402b wird hier nur ein Auskoppelelement 410 verwendet, das heißt, das Auskoppelelement 410, beispielsweise in Form eines Beugungsgitters, dient zum Auskoppeln beider übertragenen Teilfelder 402a, 402b, das heißt der voneinander zumindest teilweise verschiedenen zugehörigen Feldwinkelbereiche des Quellbildes 402.

Um dies zu bewerkstelligen, ist für die Auskopplung bei dem Auskoppelelement 410 nur eine Gitterperiode erforderlich, wobei jedoch die Form der Gitterstrukturen des Auskoppelelements 410 über seine Erstreckung veränderlich ist. Um eine homogene Auskopplung des Lichts zu erreichen, ist es vorteilhaft, für das in Fig. 26 von links eingekoppelte Licht die Auskoppeleffizienz des Auskoppelelements 410 von links nach rechts und für das von rechts in Fig. 26 eingekoppelte Licht die Auskoppeleffizienz des Auskoppelelements 410 von rechts nach links zunehmen zu lassen. Dies kann wie in Fig. 27 dargestellt dadurch erreicht werden, dass das Beugungsgitter des Auskoppelelements 410 in einem mittleren Bereich 410m als symmetrischen Sinusgitter ausgelegt ist, wobei in diesem Bereich die Auskoppeleffizienzen für beide Einkoppelrichtungen (links und rechts) identisch sind, während das Auskoppelelement 410 beidseitig des mittleren Bereichs 410m zunehmend asymmetrische Formen eines Beugungsgitters annimmt, die zunehmend die Form eines geblazeten Gitters annehmen. In Fig. 27 ist dies schematisch für einen Bereich 410l und Bereich 410r, die beide außerhalb des mittleren Bereichs 410m angeordnet sind, gezeigt. Ebenfalls ist in Fig. 27 schematisch gezeigt, dass die Neigungsrichtung des zunehmend geblazten Gitters in den äußeren Bereichen 410l und 410r gegensinnig zueinander ist.

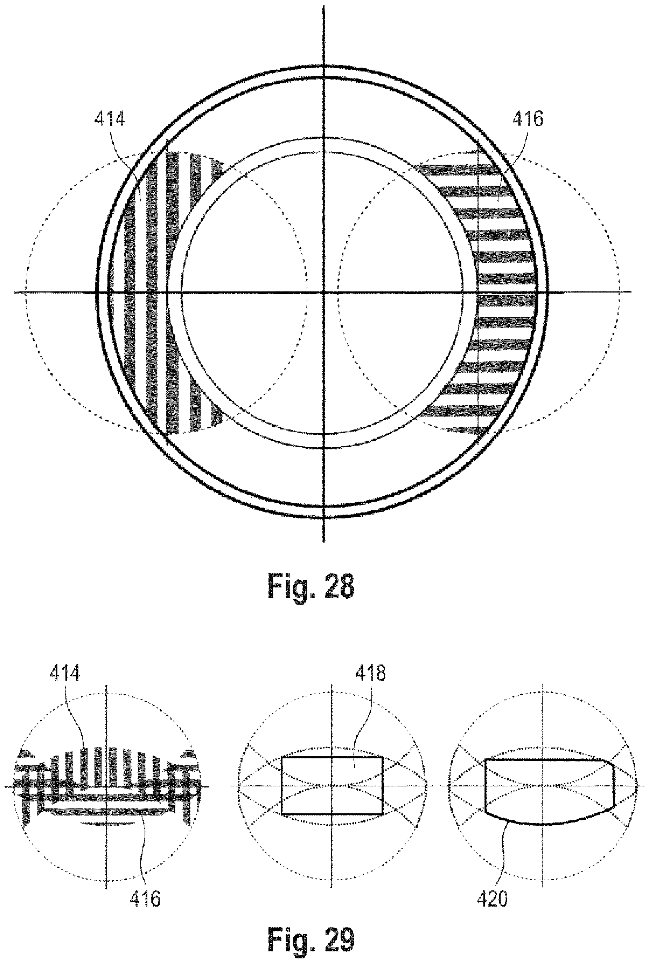

Fig. 28 zeigt die von dem optischen System 400 übertragenen beiden Feldwinkelbereiche entsprechend den Teilfeldern 402a und 402b bei einer bestimmten Gitterperiode des Auskoppelelements 410 von 498 nm und mit Polycarbonat als Material des Lichtleiters 406 für eine Wellenlänge λ von 550 nm. Die übertragenen bzw. übertragbaren Feldbereiche sind in Fig. 28 schraffiert gezeigt und mit dem Bezugszeichen 414 und 416 bezeichnet. Die Darstellung im k-Raum gemäß Fig. 28 entspricht einer Darstellung, die ähnlich zu Fig. 19, untere Teilbilder, ist.

Fig. 29, linkes Teilbild, stellt die beiden zusammengesetzten Feldwinkelbereiche 414 und 416 als Projektion des k-Raums dar. Im mittleren Teilbild von Fig. 29 ist ein rechteckiges Feld 418 mit einem Aspektverhältnis von 16:9 eingezeichnet. Damit ist ein Feldwinkel bzw. Sichtfeld von 65° x 36° mit einer Diagonale von 75° erreichbar.

Gemäß dem erfindungsgemäßen Konzept ist es auch möglich, einen größeren Feldwinkelbereich zu übertragen, wenn die Feldwinkelbereiche oder zumindest einer der Feldwinkelbereiche zumindest teilweise bogenförmig berandet ist bzw. sind. Dies ist an einem Beispiel im rechten Teilbild in Fig. 29 für das rechte Auge dargestellt. Hier ist beispielhaft der Feldwinkelbereich des Teilfeldes 402b bzw. das Teilfeld 402b an seiner unteren Seite mit einem bogenförmigen Feldrand 420 berandet. Die bogenförmige Berandung findet hier demnach nicht wie bei den bisherigen Ausführungsbeispielen an den einander zugewandten Feldrändern der einzelnen Feldwinkelbereiche statt, sondern an einem äußeren Rand zumindest eines der Teilfelder.

Die Ausgestaltung gemäß dem rechten Teilbild in Fig. 29 ist beispielsweise wünschenswert, um für das rechte Auge den Feldwinkel in dem rechten Halbraum zu vergrößern.

Gleichzeitig kann der Feldwinkelbereich für die Augmentierung der unteren Hemisphäre durch eine bogenförmige Berandung des übertragenen Feldbereichs vergrößert werden. Selbstverständlich sind weitere Varianten denkbar, wie eine weitere Vergrößerung des Sichtfeldes durch eine bogenförmige Berandung der oberen Hemisphäre, das heißt des Teilfeldes 402a.

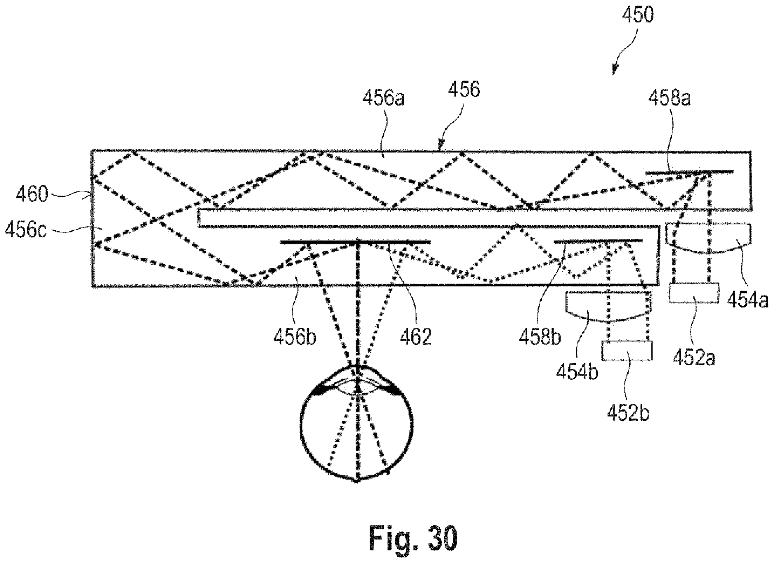

Für die Ausgestaltung mit einer Einkopplung der Teilfelder von oben und unten bzw. links und rechts ist es vorteilhaft, die Einkopplung auf eine Seite des Lichtleiters zu legen, wie in Fig. 30 für eine Abwandlung des optischen Systems 400 gezeigt ist, die mit dem Bezugszeichen 450 versehen ist. Das optische System 450 weist wiederum nur einen Lichtleiter 456 auf, der einen ersten Abschnitt 456a, einen zweiten Abschnitt 456b und einen dritten Abschnitt 456c aufweist. Die Abschnitte 456a und 456b verlaufen parallel zueinander, während der Abschnitt 456c die beiden Abschnitte 456a und 456b vorzugsweise einstückig miteinander verbindet und senkrecht zu diesen beiden Abschnitten verläuft. Die Einkoppelelemente 458a und 458b sind nunmehr auf derselben Seite an den freien Enden des ersten Abschnitts 456a bzw. des zweiten Abschnitts 456b des Lichtleiters 456 angeordnet.

Das Teilfeld 402a des Quellbildes wird über das Einkoppelelement 458a in den ersten Abschnitt 456a des Lichtleiters 456 eingekoppelt, wobei das so eingekoppelte Licht über Totalreflexion und im dritten Abschnitt 456c über eine verspiegelte Fläche 460 bzw. dort vorhandene Retroreflektoren in den zweiten Abschnitt 456b geführt wird, in dem es durch das gemeinsame Auskoppelelement 462 wie im Fall des Systems 400 zusammen mit dem anderen Teilfeld 452b ausgekoppelt wird.

Auf diese Weise kann ein großer Feldwinkelbereich bzw. ein großes Sichtfeld mit nur einem diffraktiven Auskoppelelement 462 pro Wellenlängenbereich erreicht und die Transmission des optischen Systems 450 erhöht werden, wobei gleichzeitig die Einkoppelelemente 458a und 458b und die zugehörigen Optiken 454a und 454b nur auf einer Seite des optischen Übertragungssystems, hier des Lichtleiters 456 angeordnet sind. Bei Farbmultiplexing mit verschiedenen Auskoppelelementen für die drei Farben rot, grün und blau in nur einem Lichtleiter lässt sich so erfindungsgemäß ein Übertragungselement in Form eines Lichtleiters aus Polycarbonat mit großem Feldwinkelbereich von bis zu 65° x 36° mit nur einem Lichtleiter und drei Auskoppelgittern in Transmissionsrichtung realisieren. In Episulfiden oder PTU mit einer Brechzahn von n=1,76 sind übertragbare gesamte Feldwinkelbereiche von 90° x 51° mit einer Diagonalen von 103° realisierbar.

**Patentansprüche**

1. Optisches System zum Übertragen eines Quellbildes (12; 12'; 302; 402), wobei von dem Quellbild (12; 12'; 302; 402) Licht mit einem Feldwinkelspektrum ausgeht, mit einer Lichtleiteranordnung (15; 15'; 306a-306c; 406; 456), in der das Licht durch Totalreflexion propagieren kann, mit einer diffraktiven optischen Einkoppelanordnung (16; 308a-308c; 408a, 408b; 458a, 458b) zum Einkoppeln des von dem Quellbild (12; 12'; 302; 402) ausgehenden Lichts in die Lichtleiteranordnung (15; 15'; 306a-306c; 406; 456), und mit einer diffraktiven optischen Auskoppelanordnung (17; 17';310a-310c; 410; 462) zum Auskoppeln des in der Lichtleiteranordnung (15; 15'; 306a-306c; 406; 456) propagierten Lichtes aus der Lichtleiteranordnung (15; 15'; 306a-306c; 406; 456), wobei die Einkoppelanordnung (16; 308a-308c; 408a, 408b; 458a, 458b) ein erstes Einkoppelelement (18; 18'; 308a; 408a; 458a) aufweist, das zur Einkopplung von Licht aus einem ersten Teilfeld (12a; 12a'; 252; 402a; 452a) des Quellbildes (12; 12'; 302; 402) mit Feldwinkeln aus einem ersten Feldwinkelbereich des Feldwinkelspektrums in die Lichtleiteranordnung (15; 15'; 306a-306c; 406; 456) angeordnet ist, und dass die Einkoppelanordnung (16) zumindest ein zweites Einkoppelelement (19; 19'; 308b; 408b; 458b) aufweist, das zum Einkoppeln von Licht aus zumindest einem, von dem ersten Teilfeld (12a; 12a'; 252; 402a; 452a) zumindest teilweise verschiedenen, zweiten Teilfeld (12b; 12b'; 254; 402b; 452b) des Quellbildes (12; 12'; 302; 402) mit Feldwinkeln aus einem von dem ersten Feldwinkelbereich zumindest teilweise verschiedenen zweiten Feldwinkelbereich des Feldwinkelspektrums in die Lichtleiteranordnung (15; 15'; 306a-306c; 406; 456) angeordnet ist, und dass das übertragene erste Teilfeld (12a; 12a'; 252; 402a; 452a) und das übertragene zumindest eine zweite Teilfeld (12b; 12b'; 254; 402b; 452b) des Quellbildes (12; 12'; 302; 402) nach der Auskopplung aus der Lichtleiteranordnung (15; 15'; 306a-306c; 406; 456) zumindest teilweise einander überlagert sind, **dadurch gekennzeichnet, dass** das System eine Vorrichtung zum Aufteilen des Quellbildes (12) in das erste und zumindest eine zweite Teilfeld (12a, 12b) aufweist, und dass das erste Teilfeld (252; 402a; 452a) und das zumindest eine zweite Teilfeld (254; 402b; 452b) vor der Einkopplung in die Lichtleiteranordnung (15; 15'; 306a-306c; 406; 456) zumindest teilweise bogenförmig berandet sind, wobei das erste Teilfeld (252) einen ersten Feldrand (258) und das zumindest eine zweite Teilfeld (254; 256) einen zweiten Feldrand (260) aufweist, wobei der erste Feldrand (258) dem zweiten Feldrand (260) unmittelbar benachbart ist, und wobei der erste Feldrand konkav bogenförmig und der zweite Feldrand konvex bogenförmig ist, oder wobei der erste Feldrand (258) konvex bogenförmig und der zweite Feldrand (260) konkav bogenförmig ist.

2. Optisches System nach Anspruch 1, **dadurch gekennzeichnet, dass** das erste Teilfeld (252) und das zweite Teilfeld (254) im Bereich des ersten und zweiten Feldrandes (258, 260) einen teilweisen Überlapp aufweisen.

3. Optisches System nach Anspruch 1 oder 2, **dadurch gekennzeichnet, dass** die Einkoppelanordnung ein drittes Einkoppelelement (308c) zum Einkoppeln eines dritten Teilfeldes (254) des Quellbildes aufweist, wobei das dritte Teilfeld (254) zwischen dem ersten und dem zweiten Teilfeld (252, 256) angeordnet ist, und wobei das dritte Teilfeld (254) dritte Feldränder (260, 262) aufweist, von denen eines dem ersten Feldrand (258) und das andere dem zweiten Feldrand (264) unmittelbar benachbart ist, und dass beide dritten Feldränder (260, 262) bogenförmig sind.

4. Optisches System nach einem der Ansprüche 1 bis 3, **dadurch gekennzeichnet, dass** das erste Teilfeld (416) und/oder das zweite Teilfeld (414) an einem äußeren Feldrand (420) bogenförmig berandet ist/sind.

5. Optisches System nach einem der Ansprüche 1 bis 4, **dadurch gekennzeichnet, dass** die Einkoppelanordnung eine Anzahl von N Einkoppelelementen aufweist, wobei N eine ganze Zahl > 2 ist, die zur Einkopplung von Licht aus N verschiedenen Teilfeldern (12a, 12b, ...; 12a', 12b', ...) des Quellbildes mit Feldwinkeln aus N zumindest teilweise verschiedenen Feldwinkelbereichen (22a, 22b, ...; 22a', 22b', ...) des Feldwinkelspektrums in die Lichtleiteranordnung (15; 15') angeordnet sind.

6. Optisches System nach einem der Ansprüche 1 bis 5, **dadurch gekennzeichnet, dass** die Einkoppelanordnung zumindest zwei erste und zumindest zwei zweite Einkoppelelemente aufweist, wobei eines der zwei ersten und eines der zwei zweiten Einkoppelelemente zur Einkopplung von Licht aus dem ersten Teilfeld (12a; 12a') bzw. aus dem zweiten Teilfeld (12b; 12b') in einem ersten Wellenlängenbereich in die Lichtleiteranordnung (15; 15') angeordnet ist, und das andere der zwei ersten und das andere der zwei zweiten Einkoppelelemente zur Einkopplung von Licht aus dem ersten Teilfeld (12a; 12a') bzw. aus dem zweiten Teilfeld (12b; 12b') in einem zweiten Wellenlängenbereich, der von dem ersten Wellenlängenbereich verschieden ist, in die Lichtleiteranordnung (15; 15') angeordnet ist.

7. Optisches System nach Anspruch 6, **dadurch gekennzeichnet, dass** die Lichtleiteranordnung (15) für die Propagation von Licht im ersten Wellenlängenbereich einen ersten Lichtleiter und für die Propagation von Licht in dem zumindest einen zweiten Wellenlängenbereich zumindest einen separaten zweiten Lichtleiter aufweist.

8. Optisches System nach einem der Ansprüche 1 bis 7, **dadurch gekennzeichnet, dass** die Lichtleiteranordnung (15) einen ersten Lichtleiter (20), in den das erste Einkoppelelement (18) das Licht aus dem ersten Teilfeld (12a) einkoppelt, und zumindest einen zweiten Lichtleiter (21) aufweist, in den das zumindest eine zweite Einkoppelelement (19) das Licht aus dem zumindest einen zweiten Teilfeld (12b) einkoppelt.

9. Optisches System nach einem der Ansprüche 1 bis 7, **dadurch gekennzeichnet, dass** die Lichtleiteranordnung (15') einen Lichtleiter (20') aufweist, in den das erste Einkoppelelement (18') das Licht aus dem ersten Teilfeld (12a') und das zumindest eine zweite Einkoppelelement (19') das Licht aus dem zumindest einen zweiten Teilfeld (12b') einkoppelt, wobei das erste Einkoppelement (18'; 408a) und das zweite Einkoppelement (19'; 408b) in entgegengesetzten Endbereichen des Lichtleiters (20'; 406) angeordnet sind.

10. Optisches System nach einem der Ansprüche 1 bis 7, **dadurch gekennzeichnet, dass** die Lichtleiteranordnung (15') einen Lichtleiter (456) aufweist, in den das erste Einkoppelelement (458a) das Licht aus dem ersten Teilfeld (452a) und das zumindest eine zweite Einkoppelelement (458b) das Licht aus dem zumindest einen zweiten Teilfeld (452b) einkoppelt, wobei der Lichtleiter (456) zwei zueinander parallele erste und zweite Abschnitte (456a, 456b) und an einem ersten Ende einen zu den ersten und zweiten Abschnitten (456a, 456b) senkrechten dritten Abschnitt (456c) aufweist, und wobei das erste und zweite Einkoppelement (458a, 458b) an freien zweiten Enden des Lichtleiters (456) angeordnet sind.

11. Optisches System nach einem der Ansprüche 1 bis 10, **dadurch gekennzeichnet, dass** die Auskoppelanordnung (17) ein erstes Auskoppelelement (23), das zum Auskoppeln von Licht aus dem ersten Teilfeld (12a) des Quellbildes (12) aus der Lichtleiteranordnung (15) angeordnet ist, und zumindest ein zweites Auskoppelelement (24) aufweist, das zum Auskoppeln von Licht aus dem zumindest einen zweiten Teilfeld (12b) des Quellbildes (12) aus der Lichtleiteranordnung (15) angeordnet ist.

12. Optisches System nach einem der Ansprüche 1 bis 11, **dadurch gekennzeichnet, dass** die Vorrichtung zum Aufteilen des Quellbildes eine optische Anordnung mit zumindest einer Feldblende (314a, 314b, 314c) zur Erzeugung des ersten und/oder zweiten Teilfeldes (252, 254, 256) mit zumindest teilweise bogenförmigem Feldrand (258, 260, 262, 264) aufweist, oder dass die Vorrichtung eine elektronische Vorrichtung zur elektronischen Erzeugung des ersten und/oder zweiten Teilfeldes (252, 254, 256) mit zumindest teilweise bogenförmigem Feldrand (258, 260, 262, 264) aufweist.

13. Optisches System nach einem der Ansprüche 1 bis 12, **dadurch gekennzeichnet, dass** die Lichtleiteranordnung (42) gekrümmt ist.

14. Optisches System nach Anspruch 13, **dadurch gekennzeichnet, dass** die Lichtleiteranordnung (42) zwischen der Einkoppelanordnung (46) und der Auskoppelanordnung (48) eine diffraktive Korrekturanordnung (50) aufweist, um Aberrationen der Wellenfront des übertragenen Lichts zu korrigieren.

15. Optisches Verfahren zum Übertragen eines Quellbildes (12; 12'; 302; 402), wobei von dem Quellbild (12; 12'; 302; 402) Licht mit einem Feldwinkelspektrum ausgeht, mit den Schritten:

Aufteilen des von dem Quellbild (12;12'; 302; 402) ausgehenden Lichtes in ein erstes Teilfeld (12a; 12a'; 252; 402a; 452a), wobei das Licht des ersten Teilfeldes (12a; 252; 402a; 452a) Feldwinkel in einem ersten Feldwinkelbereich des Feldwinkelspektrums aufweist, und in zumindest ein zweites Teilfeld (12b; 12b'; 254; 402b; 452b), wobei das Licht des zumindest einen zweiten Teilfeldes (12b; 12b'; 254; 402b; 452b) Feldwinkel in einem von dem ersten Feldwinkelbereich (22a; 22a') zumindest teilweise verschiedenen zweiten Feldwinkelbereich (22b; 22b') des Feldwinkelspektrums aufweist, wobei das erste Teilfeld (252; 402a; 452a) und das zumindest eine zweite Teilfeld (254; 402b; 452b) zumindest teilweise bogenförmig berandet sind, wobei das erste Teilfeld (252) einen ersten Feldrand (258) und das zumindest eine zweite Teilfeld (254; 256) einen zweiten Feldrand (260) aufweist, wobei der erste Feldrand (258) dem zweiten Feldrand (260) unmittelbar benachbart ist, und wobei der erste Feldrand konkav bogenförmig und der zweite Feldrand konvex bogenförmig ist, oder wobei der erste Feldrand (258) konvex bogenförmig und der zweite Feldrand (260) konkav bogenförmig ist

diffraktives Einkoppeln von Licht des ersten Teilfeldes (12a; 12a'; 252; 402a; 452a) und, separiert von der Einkopplung des Lichts des ersten Teilfeldes (12a; 12a'; 252; 402a; 452a), diffraktives Einkoppeln des zumindest einen zweiten Teilfeldes (12b; 12b'; 254; 402b; 452b) in eine Lichtleiteranordnung (15; 15'; 306a-306c; 406; 456) und Propagieren des Lichtes des ersten Teilfeldes (12a; 12a'; 252; 402a; 452a) und des zweiten Teilfeldes (12b; 12b'; 254; 402b; 452b) in der Lichtleiteranordnung (15; 15'; 306a-306c; 406; 456),

diffraktives Auskoppeln des ersten Teilfeldes (12a; 12a'; 252; 402a; 452a) und des zumindest einen zweiten Teilfeldes (12b; 12b'; 254; 402b; 452b) aus der Lichtleiteranordnung (15; 15'; 306a-306c; 406; 456) derart, dass das übertragene erste Teilfeld (12a; 12a'; 252; 402a; 452a) und das übertragene zumindest eine zweite Teilfeld (12b; 12b'; 254; 402b; 452b) des Quellbildes (12; 12'; 302; 402) nach der Auskopplung aus der Lichtleiteranordnung (15; 15') zumindest teilweise einander überlagert sind.

**Claims**

1. Optical system for transmitting a source image (12; 12'; 302; 402), wherein light having a field angle spectrum emanates from the source image (12; 12'; 302; 402), comprising an optical waveguide arrangement (15; 15'; 306a-306c; 406; 456), in which the light can propagate by total internal reflection, comprising a diffractive optical input coupling arrangement (16; 308a-308c; 408a, 408b; 458a, 458b) for coupling the light emanating from the source image (12; 12'; 302; 402) into the optical waveguide arrangement (15; 15'; 306a-306c; 406; 456), and comprising a diffractive optical output coupling arrangement (17; 17'; 310a-310c; 410; 462) for coupling the light that has propagated in the optical waveguide arrangement (15; 15'; 306a-306c; 406; 456) out from the optical waveguide arrangement (15; 15'; 306a-306c; 406; 456), wherein the input coupling arrangement (16; 308a-308c; 408a, 408b; 458a, 458b) has a first input coupling element (18; 18'; 308a; 408a; 458a) arranged for coupling light from a first subfield (12a; 12a'; 252; 402a; 452a) of the source image (12; 12'; 302; 402) having field angles from a first field angle range of the field angle spectrum into the optical waveguide arrangement (15; 15'; 306a-306c; 406; 456), and in that the input coupling arrangement (16) has at least one second input coupling element (19; 19'; 308b; 408b; 458b) arranged for coupling light from at least one second subfield (12b; 12b'; 254; 402b; 452b) - at least partly different from the first subfield (12a; 12a'; 252; 402a; 452a) - of the source image (12; 12'; 302; 402) having field angles from a second field angle range - at least partly different from the first field angle range - of the field angle spectrum into the optical waveguide arrangement (15; 15'; 306a-306c; 406; 456), and in that the transmitted first subfield (12a; 12a'; 252; 402a; 452a) and the transmitted at least one second subfield (12b; 12b'; 254; 402b; 452b) of the source image (12; 12'; 302; 402) are at least partly superimposed on one another after coupling out from the optical waveguide arrangement (15; 15'; 306a-306c; 406; 456), **characterized in that** the system comprises a device for dividing the source image (12) into the first and at least one second subfield (12a, 12b) and **in that** the first subfield (252; 402a; 452a) and the at least one second subfield (254; 402b; 452b) are at least partly arcuately bounded before coupling into the optical waveguide arrangement (15; 15'; 306a-306c; 406; 456), wherein the first subfield (252) has a first field edge (258) and the at least one second subfield (254; 256) has a second field edge (260), wherein the first field edge (258) is directly adjacent to the second field edge (260), and wherein the first field edge is concavely arcuate and the second field edge is convexly arcuate, or wherein the first field edge (258) is convexly arcuate and the second field edge (260) is concavely arcuate.

2. Optical system according to Claim 1, **characterized in that** the first subfield (252) and the second subfield (254) have a partial overlap in the region of the first and second field edges (258, 260).

3. Optical system according to Claim 1 or 2, **characterized in that** the input coupling arrangement has a third input coupling element (308c) for coupling in a third subfield (254) of the source image, wherein the third subfield (254) is arranged between the first and second subfields (252, 256), and wherein the third subfield (254) has third field edges (260, 262), of which one is directly adjacent to the first field edge (258) and the other is directly adjacent to the second field edge (264), and **in that** both third field edges (260, 262) are arcuate.

4. Optical system according to any one of Claims 1 to 3, **characterized in that** the first subfield (416) and/or the second subfield (414) are/is arcuately bounded at an outer field edge (420).

5. Optical system according to any one of Claims 1 to 4, **characterized in that** the input coupling arrangement has a number of N input coupling elements, wherein N is an integer > 2, which are arranged for coupling light from N different subfields (12a, 12b, ...; 12a', 12b', ...) of the source image having field angles from N at least partly different field angle ranges (22a, 22b, ...; 22a', 22b', ...) of the field angle spectrum into the optical waveguide arrangement (15; 15').

6. Optical system according to any one of Claims 1 to 5, **characterized in that** the input coupling arrangement has at least two first and at least two second input coupling elements, wherein one of the two first and one of the two second input coupling elements are arranged for coupling light from the first subfield (12a; 12a') and from the second subfield (12b; 12b'), respectively, in a first wavelength range into the optical waveguide arrangement (15; 15'), and the other of the two first and the other of the two second input coupling elements are arranged for coupling light from the first subfield (12a; 12a') and from the second subfield (12b; 12b'), respectively, in a second wavelength range, which is different from the first wavelength range, into the optical waveguide arrangement (15; 15').

7. Optical system according to Claim 6, **characterized in that** the optical waveguide arrangement (15) has a first optical waveguide for the propagation of light in the first wavelength range and has at least one separate second optical waveguide for the propagation of light in the at least one second wavelength range.

8. Optical system according to any one of Claims 1 to 7, **characterized in that** the optical waveguide arrangement (15) has a first optical waveguide (20), into which the first input coupling element (18) couples the light from the first subfield (12a), and at least one second optical waveguide (21), into which the at least one second input coupling element (19) couples the light from the at least one second subfield (12b).

9. Optical system according to any one of Claims 1 to 7, **characterized in that** the optical waveguide arrangement (15') has an optical waveguide (20'), into which the first input coupling element (18') couples the light from the first subfield (12a') and the at least one second input coupling element (19') couples in the light from the at least one second subfield (12b'), wherein the first input coupling element (18'; 408a) and the second input coupling element (19'; 408b) are arranged in opposite end regions of the optical waveguide (20'; 406).

10. Optical system according to any one of Claims 1 to 7, **characterized in that** the optical waveguide arrangement (15') has an optical waveguide (456), into which the first input coupling element (458a) couples the light from the first subfield (452a) and the at least one second input coupling element (458b) couples the light from the at least one second subfield (452b), wherein the optical waveguide (456) has two mutually parallel first and second sections (456a, 456b) and at a first end a third section (456c) perpendicular to the first and second sections (456a, 456b), and wherein the first and second input coupling elements (458a, 458b) are arranged at free second ends of the optical waveguide (456).

11. Optical system according to any one of Claims 1 to 10, **characterized in that** the output coupling arrangement (17) has a first output coupling element (23), which is arranged for coupling light from the first subfield (12a) of the source image (12) out from the optical waveguide arrangement (15), and at least one second output coupling element (24), which is arranged for coupling light from the at least one second subfield (12b) of the source image (12) out from the optical waveguide arrangement (15).

12. Optical system according to any one of Claims 1 to 11, **characterized in that** the device for dividing the source image has an optical arrangement having at least one field stop (314a, 314b, 314c) for generating the first and/or second subfield (252, 254, 256) having an at least partly arcuate field edge (258, 260, 262, 264) or **in that** the device has an electronic device for electronically generating the first and/or second subfield (252, 254, 256) having an at least partly arcuate field edge (258, 260, 262, 264).

13. Optical system according to any one of Claims 1 to 12, **characterized in that** the optical waveguide arrangement (42) is curved.

14. Optical system according to Claim 13, **characterized in that** the optical waveguide arrangement (42) has between the input coupling arrangement (46) and the output coupling arrangement (48) a diffractive correction arrangement (50) in order to correct aberrations of the wavefront of the transmitted light.

15. Optical method for transmitting a source image (12; 12'; 302; 402), wherein light having a field angle spectrum emanates from the source image (12; 12'; 302; 402), comprising the following steps:

   dividing the light emanating from the source image (12; 12'; 302; 402) into a first subfield (12a; 12a'; 252; 402a; 452a), wherein the light of the first subfield (12a; 252; 402a; 452a) has field angles in a first field angle range of the field angle spectrum, and into at least one second subfield (12b; 12b'; 254; 402b; 452b), wherein the light of the at least one second subfield (12b; 12b'; 254; 402b; 452b) has field angles in a second field angle range (22b; 22b') - at least partly different from the first field angle range (22a; 22a') - of the field angle spectrum, wherein the first subfield (252; 402a; 452a) and the at least one second subfield (254; 402b; 452b) are at least partly arcuately bounded, wherein the first subfield (252) has a first field edge (258) and the at least one second subfield (254; 256) has a second field edge (260), wherein the first field edge (258) is directly adjacent to the second field edge (260), and wherein the first field edge is concavely arcuate and the second field edge is convexly arcuate, or wherein the first field edge (258) is convexly arcuate and the second field edge (260) is concavely arcuate,

diffractively coupling in light of the first subfield (12a; 12a'; 252; 402a; 452a) and, separately from the input coupling of the light of the first subfield (12a; 12a'; 252; 402a; 452a), diffractively coupling in the at least one second subfield (12b; 12b'; 254; 402b; 452b) into an optical waveguide arrangement (15; 15'; 306a-306c; 406; 456) and propagating the light of the first subfield (12a; 12a'; 252; 402a; 452a) and of the second subfield (12b; 12b'; 254; 402b; 452b) in the optical waveguide arrangement (15; 15'; 306a-306c; 406; 456),

diffractively coupling out the first subfield (12a; 12a'; 252; 402a; 452a) and the at least one second subfield (12b; 12b'; 254; 402b; 452b) from the optical waveguide arrangement (15; 15'; 306a-306c; 406; 456) in such a way that the transmitted first subfield (12a; 12a'; 252; 402a; 452a) and the transmitted at least one second subfield (12b; 12b'; 254; 402b; 452b) of the source image (12; 12'; 302; 402) are at least partly superimposed on one another after coupling out from the optical waveguide arrangement (15; 15').

**Revendications**

1.  Système optique permettant de transférer une image source (12 ; 12' ; 302 ; 402), une lumière ayant un spectre d'angles de champ émanant de l'image source (12 ; 12' ; 302 ; 402), comprenant un agencement de guide de lumière (15 ; 15' ; 306a-306c ; 406 ; 456) dans lequel la lumière peut se propager par réflexion totale, comprenant un agencement d'injection optique diffractif (16 ; 308a-308c; 408a, 408b ; 458a, 458b) pour injecter la lumière émanant de l'image source (12 ; 12' ; 302 ; 402) dans l'agencement de guide de lumière (15; 15' ; 306a-306c ; 406 ; 456), et comprenant un agencement d'extraction optique diffractif (17 ; 17' ; 310a-310c; 410 ; 462) pour extraire de l'agencement de guide de lumière (15 ; 15' ; 306a-306c ; 406 ; 456) la lumière propagée dans l'agencement de guide de lumière (15; 15' ; 306a-306c ; 406 ; 456), dans lequel l'agencement d'injection (16 ; 308a-308c ; 408a, 408b ; 458a, 458b) présente un premier élément d'injection (18 ; 18' ; 308a ; 408a ; 458a) qui est agencé pour injecter dans l'agencement de guide de lumière (15 ; 15' ; 306a-306c ; 406 ; 456) la lumière d'un premier champ partiel (12a ; 12a' ; 252 ; 402a ; 452a) de l'image source (12 ; 12' ; 302 ; 402) ayant des angles de champ d'une première plage d'angles de champ du spectre d'angles de champ, et que l'agencement d'injection (16) présente au moins un deuxième élément d'injection (19 ; 19' ; 308b ; 408b ; 458b) qui est agencé pour injecter dans l'agencement de guide de lumière (15 ; 15' ; 306a-306c ; 406 ; 456) la lumière provenant d'au moins un deuxième champ partiel (12b ; 12b' ; 254 ; 402b ; 452b) de l'image source (12 ; 12' ; 302 ; 402), différent au moins en partie du premier champ partiel (12a ; 12a' ; 252 ; 402a ; 452a), ayant des angles de champ d'au moins une deuxième plage d'angles de champ au moins en partie différente de la première plage d'angles de champ du spectre d'angles de champ, et que le premier champ partiel (12a ; 12a' ; 252 ; 402a ; 452a) transmis et ledit au moins un deuxième champ partiel (12b ; 12b' ; 254 ; 402b ; 452b) transmis de l'image source (12 ; 12' ; 302 ; 402) sont au moins en partie superposés après l'extraction de l'agencement de guide de lumière (15 ; 15' ; 306a-306c ; 406 ; 456), **caractérisé en ce que** le système présente un dispositif pour diviser l'image source (12) en le premier et au moins un deuxième champ partiel (12a, 12b), et **en ce que** le premier champ partiel (252 ; 402a ; 452a) et ledit au moins un deuxième champ partiel (254 ; 402b ; 452b) sont au moins en partie bordés en forme d'arc avant l'injection dans l'agencement de guide de lumière (15; 15' ; 306a-306c ; 406 ; 456), le premier champ partiel (252) présentant un premier bord de champ (258) et ledit au moins un deuxième champ partiel (254 ; 256) présentant un deuxième bord de champ (260), le premier bord de champ (258) étant directement adjacent au deuxième bord de champ (260), et le premier bord de champ ayant une forme d'arc concave et le deuxième bord de champ ayant une forme d'arc convexe, ou le premier bord de champ (258) ayant une forme d'arc convexe et le deuxième bord de champ (260) ayant une forme d'arc concave.

2.  Système optique selon la revendication 1, **caracté-**

**risé en ce que** le premier champ partiel (252) et le deuxième champ partiel (254) présentent au niveau des premier et deuxième bords de champ (258, 260) un chevauchement partiel.

3. Système optique selon la revendication 1 ou 2, **caractérisé en ce que** l'agencement d'injection présente un troisième élément d'injection (308c) pour injecter un troisième champ partiel (254) de l'image source, le troisième champ partiel (254) étant agencé entre le premier et le deuxième champ partiel (252, 256), et dans lequel le troisième champ partiel (254) présente des troisièmes bords de champ (260, 262) dont l'un est directement adjacent au premier bord de champ (258) et l'autre est directement adjacent au deuxième bord de champ (264), et **en ce que** les deux troisièmes bords de champs (260, 262) présentent une forme d'arc.

4. Système optique selon l'une quelconque des revendications 1 à 3, **caractérisé en ce que** le premier champ partiel (416) et/ou le deuxième champ partiel (414) est/sont bordé(s) en forme d'arc au niveau d'un bord de champ extérieur (420).

5. Système optique selon l'une quelconque des revendications 1 à 4, **caractérisé en ce que** l'agencement d'injection présente un nombre de N éléments d'injection, N étant un nombre entier > 2, qui sont agencés pour injecter dans l'agencement de guide de lumière (15 ; 15') la lumière provenant de N champs partiels différents (12a, 12b, ... ; 12a', 12b', ...) de l'image source ayant des angles de champ parmi N plages d'angles de champ (22a, 22b,... ; 22a', 22b', ...), différentes au moins en partie, du spectre d'angles de champ.

6. Système optique selon l'une quelconque des revendications 1 à 5, **caractérisé en ce que** l'agencement d'injection présente au moins deux premiers et au moins deux deuxièmes éléments d'injection, dans lequel l'un des deux premiers et l'un des deux deuxièmes éléments d'injection sont agencés pour injecter dans l'agencement de guide de lumière (15; 15') la lumière provenant du premier champ partiel (12a ; 12a') ou du deuxième champ partiel (12b ; 12b') dans une première plage de longueurs d'onde, et l'autre des deux premiers et l'autre des deux deuxièmes éléments d'injection sont agencés pour injecter dans l'agencement de guide de lumière (15 ; 15') la lumière provenant du premier champ partiel (12a ; 12a') ou du deuxième champ partiel (12b ; 12b') dans une deuxième plage de longueurs d'onde qui est différente de la première plage de longueurs d'onde.

7. Système optique selon la revendication 6, **caractérisé en ce que** l'agencement de guide de lumière (15) présente un premier guide de lumière pour la propagation de lumière dans la première plage de longueurs d'onde et au moins un deuxième guide de lumière séparé pour la propagation de lumière dans ladite au moins une deuxième plage de longueurs d'onde.

8. Système optique selon l'une quelconque des revendications 1 à 7, **caractérisé en ce que** l'agencement de guide de lumière (15) présente un premier guide de lumière (20) dans lequel le premier élément d'injection (18) injecte la lumière provenant du premier champ partiel (12a), et au moins un deuxième guide de lumière (21) dans lequel ledit au moins un deuxième élément d'injection (19) injecte la lumière provenant de l'au moins un deuxième champ partiel (12b).

9. Système optique selon l'une quelconque des revendications 1 à 7, **caractérisé en ce que** l'agencement de guide de lumière (15') présente un guide de lumière (20') dans lequel le premier élément d'injection (18') injecte la lumière provenant du premier champ partiel (12a') et ledit au moins un deuxième élément d'injection (19') injecte la lumière provenant de l'au moins un deuxième champ partiel (12b'), le premier élément d'injection (18' ; 408a) et le deuxième élément d'injection (19' ; 408b) étant agencés dans des zones d'extrémité opposées du guide de lumière (20' ; 406).

10. Système optique selon l'une quelconque des revendications 1 à 7, **caractérisé en ce que** l'agencement de guide de lumière (15') présente un guide de lumière (456) dans lequel le premier élément d'injection (458a) injecte la lumière provenant du premier champ partiel (452a) et ledit au moins un deuxième élément d'injection (458b) injecte la lumière provenant de l'au moins un deuxième champ partiel (452b), dans lequel le guide de lumière (456) présente deux première et deuxième parties (456a, 456b) parallèles l'une à l'autre, et présente à une première extrémité une troisième partie (456c) perpendiculaire aux première et deuxième parties (456a, 456b), et dans lequel les premier et deuxième éléments d'injection (458a, 458b) sont agencés au niveau des deuxièmes extrémités libres du guide de lumière (456).

11. Système optique selon l'une quelconque des revendications 1 à 10, **caractérisé en ce que** l'agencement d'extraction (17) présente un premier élément d'extraction (23) qui est agencé pour extraire de l'agencement de guide de lumière (15) la lumière provenant du premier champ partiel (12a) de l'image source (12), et présente au moins un deuxième élément d'extraction (24) qui est agencé pour extraire de l'agencement de guide de lumière (15) la lumière provenant de l'au moins un deuxième champ partiel (12b) de l'image source (12).

12. Système optique selon l'une quelconque des revendications 1 à 11, **caractérisé en ce que** le dispositif de division de l'image source présente un agencement optique doté d'au moins un diaphragme de champ (314a, 314b, 314c) pour générer les premier et/ou deuxième champs partiels (252, 254, 256) ayant des bords de champ (258, 260, 262, 264) au moins partiellement en forme d'arc, ou **en ce que** le dispositif présente un dispositif électronique pour générer électroniquement les premier et/ou deuxième champs partiels (252, 254, 256) ayant des bords de champ (258, 260, 262, 264) au moins partiellement en forme d'arc.

13. Système optique selon l'une quelconque des revendications 1 à 12, **caractérisé en ce que** l'agencement de guide de lumière (42) est courbe.

14. Système optique selon la revendication 13, **caractérisé en ce que** l'agencement de guide d'onde (42) présente entre l'agencement d'injection (46) et l'agencement d'extraction (48) un agencement de correction de diffraction (50) pour corriger des aberrations du front d'onde de la lumière transmise.

15. Procédé optique permettant de transmettre une image source (12 ; 12' ; 302 ; 402), dans lequel une lumière ayant un spectre d'angles de champ émane de l'image source (12 ; 12' ; 302 ; 402), comprenant les étapes consistant à :

diviser la lumière émanant de l'image source (12 ; 12' ; 302 ; 402) en un premier champ partiel (12a ; 12a' ; 252 ; 402a ; 452a), la lumière du premier champ partiel (12a ; 252 ; 402a ; 452a) présentant des angles de champ dans une première plage d'angles de champ du spectre d'angles de champ, et en au moins un deuxième champ partiel (12b ; 12b' ; 254 ; 402b ; 452b), la lumière de l'au moins un deuxième champ partiel (12b ; 12b' ; 254 ; 402b ; 452b) présentant des angles de champ dans une deuxième plage d'angles de champ (22b ; 22b'), au moins en partie différente de la première plage d'angles de champ (22a ; 22a'), du spectre d'angles de champ, dans lequel le premier champ partiel (252 ; 402a ; 452a) et ledit au moins un deuxième champ partiel (254 ; 402b ; 452b) sont au moins en partie bordés en forme d'arc, le premier champ partiel (252) présentant un premier bord de champ (258) et ledit au moins un deuxième champ partiel (254 ; 256) présentant un deuxième bord de champ (260), le premier bord de champ (258) étant directement adjacent au deuxième bord de champ (260), et le premier bord de champ ayant une forme d'arc concave et le deuxième bord de champ ayant une forme d'arc convexe, ou le premier bord de champ (258) ayant une forme d'arc convexe et le deuxième bord de champ (260) ayant une forme d'arc concave,

injecter de manière diffractive la lumière du premier champ partiel (12a ; 12a' ; 252 ; 402a ; 452a) et, séparément de l'injection de la lumière du premier champ partiel (12a ; 12a' ; 252 ; 402a ; 452a), injecter de manière diffractive ledit au moins un deuxième champ partiel (12b ; 12b' ; 254 ; 402b ; 452b) dans un agencement de guide de lumière (15; 15' ; 306a-306c ; 406 ; 456), et propager la lumière du premier champ partiel (12a ; 12a' ; 252 ; 402a ; 452a) et du deuxième champ partiel (12b ; 12b' ; 254 ; 402b ; 452b) dans l'agencement de guide de lumière (15 ; 15' ; 306a-306c ; 406 ; 456),

extraire de manière diffractive le premier champ partiel (12a ; 12a' ; 252 ; 402a ; 452a) et ledit au moins un deuxième champ partiel (12b ; 12b' ; 254 ; 402b ; 452b) de l'agencement de guide de lumière (15 ; 15' ; 306a-306c ; 406 ; 456) de telle sorte que le premier champ partiel (12a ; 12a' ; 252 ; 402a ; 452a) transmis et ledit au moins un deuxième champ partiel (12b ; 12b' ; 254 ; 402b ; 452b) transmis de l'image source (12 ; 12' ; 302 ; 402) sont au moins en partie superposés l'un à l'autre après l'extraction de l'agencement de guide de lumière (15 ; 15').

Fig. 1

Fig. 2

n=1,53

n=1,49    n=1,59   n=1,71   n=1,85

Sichtfeld (FOV)

## Fig. 3

$\alpha_T$   $\alpha_{m,min}$   $\alpha_{m,max}$

$n_1$

A    $n_0$   136

140    138

FOV    $\alpha_{i,min}$

$\alpha_{i,max}$

## Fig. 4

Δλ (PMMA, n1 = 1.588) [μm]

Sichtfeld

## Fig. 5

Minimaler Brechungsindex (für Δλ = 0.255 μm)

144

142

148

150

146    Sichtfeld

## Fig. 6

Δλ (PMMA, n1 = 1.588) [µm]

Fig. 7

Fig. 8

Fig. 9

Fig. 10

Fig. 11

**Fig. 12A**

**Fig. 12B**

Fig. 12C

Fig. 12D

Fig. 12E

**Fig. 13**

**Fig. 14**

Fig. 15

Fig. 16

Fig. 17

**Fig. 18**

**Fig. 19**

Fig. 20

Fig. 21

Fig. 22

a)

b)

**Fig. 23**

**Fig. 24**

Fig. 25

**Fig. 26**

**Fig. 27**

414

416

**Fig. 28**

414

418

416

420

**Fig. 29**

**Fig. 30**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140140653 A1
- US 8233204 B1
- US 20140218801 A1
- US 20060221448 A1
- US 8903207 B1

**In der Beschreibung aufgeführte Nicht-Patentliteratur**

- **TAPANI LEVOLA.** Diffractive optics for virtual reality displays. *Journal of the SID,* 2006, vol. 14 (5), 467-475